# EUROPEAN PATENT APPLICATION

(11) **EP 4 782 257 A1**
(43) Date of publication of application: **29.07.2026**
(21) Application number: 24869756.7
(22) Date of filing: 17.05.2024
(51) Int. Cl.: B60L 53/302, B60L 53/16, B60L 53/31, B60L 58/26

(54) **VEHICLE-MOUNTED CHARGING CONNECTION APPARATUS, ELECTRIC VEHICLE, LIQUID COOLING DEVICE, AND CHARGE POINT**

(30) Priority: 30.09.2023 CN 202311290638
(71) Applicant: Huawei Digital Power Technologies Co., Ltd., Shenzhen, Guangdong 518043 (CN)
(72) Inventor: ZHANG, Gaolin, Shenzhen, Guangdong 518043 (CN); CHENG, Dong, Shenzhen, Guangdong 518043 (CN); HU, Minggui, Shenzhen, Guangdong 518043 (CN)
(74) Representative: Gill Jennings & Every LLP
(86) International application number: PCT/CN2024/093969
(87) International publication number: WO 2025/066190

(57) **Abstract**

A vehicle-mounted charging connection apparatus, an electric vehicle, a liquid cooling device, and a charging pile are provided. The vehicle-mounted charging connection apparatus includes a first vehicle socket and a liquid cooling connection confirm circuit. The vehicle-mounted charging connection apparatus is configured to: determine a status of connection between a liquid cooling socket and a liquid cooling plug by using the liquid cooling connection confirm circuit; and in response to the liquid cooling socket being successfully connected to the liquid cooling plug, send, to a liquid cooling device, a packet indicating that the liquid cooling socket is successfully connected to the liquid cooling plug. In this way, a heat dissipation problem during charging of the power battery can be resolved, and a charging power provided by a charging apparatus for the power battery can be increased.

## Description

This application claims priority to Chinese Patent Application No. 202311290638.9, filed with the China National Intellectual Property Administration on September 30, 2023, and entitled "VEHICLE-MOUNTED CHARGING CONNECTION APPARATUS, ELECTRIC VEHICLE, LIQUID COOLING DEVICE, AND CHARGING PILE", which is incorporated herein by reference in its entirety.

### TECHNICAL FIELD

This application relates to the field of new-energy vehicles, and in particular, to a vehicle-mounted charging connection apparatus, an electric vehicle, a liquid cooling device, and a charging pile.

### BACKGROUND

With a breakthrough in high-power charging technologies for batteries, the battery can be fully charged within a short period of time. However, in current actual application, when a charging apparatus charges a power battery at a high power, heat generated by the power battery greatly increases accordingly. If the heat cannot be eliminated in time, normally charging the power battery by the charging apparatus at the high power is affected.

An electric vehicle usually has a thermal management system. The thermal management system can dissipate heat for a power battery. However, as a charging power increases, for example, in an ultra-fast charging scenario, the power battery generates more heat, effect of heat dissipation only via the thermal management system is limited, and a heat dissipation capability of the thermal management system cannot meet a heat dissipation requirement of the power battery during high-power charging.

### SUMMARY

This application provides a vehicle-mounted charging connection apparatus, an electric vehicle, a liquid cooling device, and a charging pile. When a charging apparatus charges a power battery of the electric vehicle at a high power, the liquid cooling device may transmit a coolant to a thermal management system of the power battery. Therefore, a heat dissipation problem during charging of the power battery can be resolved, and a charging power provided by the charging apparatus for the power battery can be increased.

According to a first aspect, a vehicle-mounted charging connection apparatus is provided. The vehicle-mounted charging connection apparatus is used in an electric vehicle. The vehicle-mounted charging connection apparatus includes a first vehicle socket and a liquid cooling connection confirm circuit. The first vehicle socket includes a liquid cooling socket and a liquid cooling connection confirm socket. The first vehicle socket is configured to connect to a liquid cooling connector of a liquid cooling device. One end of the liquid cooling socket is configured to connect to a liquid cooling plug of the liquid cooling connector, and the other end of the liquid cooling socket is connected to a thermal management system of a power battery through a liquid cooling pipeline. The liquid cooling socket is configured to receive a coolant output by the liquid cooling plug, or the liquid cooling socket is configured to output a coolant to the liquid cooling plug. One end of the liquid cooling connection confirm socket is configured to connect to a liquid cooling connection confirm plug of the liquid cooling connector, and the other end of the liquid cooling connection confirm socket is connected to the liquid cooling connection confirm circuit. The vehicle-mounted charging connection apparatus is configured to: determine a status of connection between the liquid cooling socket and the liquid cooling plug by using the liquid cooling connection confirm circuit; and in response to the liquid cooling socket being successfully connected to the liquid cooling plug, send, to the liquid cooling device, a packet indicating that the liquid cooling socket is successfully connected to the liquid cooling plug.

The liquid cooling socket in this embodiment of this application includes the liquid cooling connection confirm socket. Because the liquid cooling connection confirm socket is connected to the liquid cooling connection confirm circuit, the vehicle-mounted charging connection apparatus may determine the status of connection between the liquid cooling socket and the liquid cooling plug by using the liquid cooling connection confirm circuit. In addition, when the liquid cooling socket is successfully connected to the liquid cooling plug, and a charging apparatus charges the power battery at a high power, the coolant is received from the liquid cooling device by using the liquid cooling socket, and the coolant is transmitted to the thermal management system of the power battery to cool the power battery, to resolve a heat dissipation problem during charging of the power battery, thereby increasing a charging power provided by the charging apparatus for the power battery. In addition, when determining that the liquid cooling socket is successfully connected to the liquid cooling plug, the vehicle-mounted charging connection apparatus may send the packet to the liquid cooling device. The packet indicates that the liquid cooling socket is successfully connected to the liquid cooling plug. In this way, the liquid cooling device does not need to determine the status of connection between the liquid cooling socket and the liquid cooling plug, to save a time for determining the status of connection between the socket and the plug, thereby improving efficiency.

With reference to the first aspect, in a possible design, when the liquid cooling socket is connected to the liquid cooling plug, the liquid cooling connection confirm circuit connected to the liquid cooling connection confirm socket and a liquid cooling connection confirm circuit connected to the liquid cooling connection confirm plug form a current loop. The vehicle-mounted charging connection apparatus is configured to detect a voltage at a detection point in the current loop to determine the status of connection between the liquid cooling socket and the liquid cooling plug. In response to the voltage at the detection point in the liquid cooling connection confirm circuit reaching a vehicle-end preset value, the vehicle-mounted charging connection apparatus is configured to determine that the liquid cooling socket is successfully connected to the liquid cooling plug.

In this embodiment of this application, the vehicle-mounted charging connection apparatus determines, based on the voltage at the detection point in the liquid cooling connection confirm circuit reaching the vehicle-end preset value, that the liquid cooling socket is successfully connected to the liquid cooling plug, to improve accuracy of identifying the status of connection between the liquid cooling socket and the liquid cooling plug by the vehicle-mounted charging connection apparatus, thereby meeting a heat dissipation requirement of the power battery during high-power charging. This helps improve the charging power of the power battery and shortens the charging duration of the electric vehicle.

With reference to the first aspect, in a possible design, the vehicle socket further includes a ground socket. One end of the ground socket is configured to connect to a ground plug of a liquid cooling connector, and the other end of the ground socket is connected to a vehicle body ground platform. The liquid cooling connection confirm plug includes a first liquid cooling connection confirm plug and a second liquid cooling connection confirm plug. The liquid cooling connection confirm circuit includes a conducting wire. The first liquid cooling connection confirm plug is connected to the second liquid cooling connection confirm plug through the conducting wire. The liquid cooling connection confirm socket includes a first liquid cooling connection confirm socket and a second liquid cooling connection confirm socket. The liquid cooling connection confirm circuit includes a first resistor unit. The first liquid cooling connection confirm socket is connected to a voltage source through the first resistor unit, and the second liquid cooling connection confirm circuit is connected to the vehicle body ground platform.

With reference to the first aspect, in a possible design, in response to a voltage at a detection point between the first resistor unit and the first liquid cooling connection confirm socket reaching the vehicle-end preset value, the vehicle-mounted charging connection apparatus is configured to determine that the liquid cooling socket is successfully connected to the liquid cooling plug.

In this embodiment of this application, because the detection point set in this application is connected to the voltage source in the electric vehicle, when the voltage at the detection point is a voltage output by the voltage source, the vehicle-mounted charging connection apparatus identifies that the liquid cooling socket is not connected to the liquid cooling plug. When the voltage at the detection point reaches the vehicle-end preset value, the vehicle-mounted charging connection apparatus identifies that the liquid cooling socket is connected to the liquid cooling plug. The status of connection between the liquid cooling socket and the liquid cooling plug is identified based on the voltage at the detection point, to improve accuracy of identifying the status of connection between the liquid cooling socket and the liquid cooling plug by the vehicle-mounted charging connection apparatus, thereby meeting a heat dissipation requirement of the power battery during high-power charging. This helps improve the charging power of the power battery and shortens the charging duration of the electric vehicle.

With reference to the first aspect, in a possible design, the vehicle socket further includes a ground socket. One end of the ground socket is configured to connect to a ground plug of the liquid cooling connector, and the other end of the ground socket is connected to a vehicle body ground platform. The liquid cooling connection confirm plug includes a first liquid cooling connection confirm plug and a second liquid cooling connection confirm plug. The liquid cooling connection confirm circuit includes a conducting wire. The first liquid cooling connection confirm plug is connected to the second liquid cooling connection confirm plug through the conducting wire. The liquid cooling connection confirm socket includes a first liquid cooling connection confirm socket and a second liquid cooling connection confirm socket. The liquid cooling connection confirm circuit includes a second resistor unit. The first liquid cooling connection confirm socket is connected to a voltage source, and the second liquid cooling connection confirm socket is connected to the vehicle body ground platform through the second resistor unit.

With reference to the first aspect, in a possible design, in response to a voltage at a detection point between the second resistor unit and the second liquid cooling connection confirm socket reaching the vehicle-end preset value, the vehicle-mounted charging connection apparatus is configured to determine that the liquid cooling socket is successfully connected to the liquid cooling plug.

In this embodiment of this application, because the detection point set in this application is connected to the vehicle body ground platform in the electric vehicle, when the voltage at the detection point is 0, the vehicle-mounted charging connection apparatus identifies that the liquid cooling socket is not connected to the liquid cooling plug. When the voltage at the detection point reaches the vehicle-end preset value, the vehicle-mounted charging connection apparatus identifies that the liquid cooling socket is connected to the liquid cooling plug. The status of connection between the liquid cooling socket and the liquid cooling plug is identified based on the voltage at the detection point, to improve accuracy of identifying the status of connection between the liquid cooling socket and the liquid cooling plug by the vehicle-mounted charging connection apparatus, thereby meeting a heat dissipation requirement of the power battery during high-power charging. This helps improve the charging power of the power battery and shortens the charging duration of the electric vehicle.

With reference to the first aspect, in a possible design, the electric vehicle includes a traction apparatus. The traction apparatus is configured to draw the liquid cooling connector to move, so that the first vehicle socket is fully connected to the liquid cooling connector. The liquid cooling connection confirm socket further includes a third liquid cooling connection confirm socket. A distance between the second liquid cooling connection confirm socket and the plug/unplug end is equal to a distance between the third liquid cooling connection confirm socket and the plug/unplug end. A distance between the liquid inlet/outlet of the liquid cooling socket and the plug/unplug end is less than the distance between the third liquid cooling connection confirm socket and the plug/unplug end. The distance between the liquid inlet/outlet of the liquid cooling socket and the plug/unplug end is greater than or equal to a distance between the first liquid cooling connection confirm socket and the plug/unplug end.

In this embodiment of this application, when a contact of the first liquid cooling connection confirm socket is connected to a contact of the first liquid cooling connection confirm plug, it indicates that the liquid cooling socket and the liquid cooling plug are in a semi-connected state. The traction apparatus may draw the liquid cooling connector to move, so that the liquid cooling connector is close to the first vehicle socket. Finally, the liquid cooling connector and the first vehicle socket are in a fully connected state. A user does not need to manually push the liquid cooling connector, thereby improving user experience. In addition, the distance between the second liquid cooling connection confirm socket and the plug/unplug end is equal to the distance between the third liquid cooling connection confirm socket and the plug/unplug end. This helps the liquid cooling device transmit the liquid cooling medium to the thermal management system of the power battery in time and can further avoid a misjudgment of the liquid cooling device.

With reference to the first aspect, in a possible design, the vehicle-mounted charging connection apparatus further includes a wireless communication module. The vehicle-mounted charging connection apparatus is configured to send a packet to the charging pile by using the wireless communication module.

In this embodiment of this application, when the vehicle-mounted charging connection apparatus determines that the liquid cooling socket is successfully connected to the liquid cooling plug, the vehicle-mounted charging connection apparatus may send the packet to the liquid cooling device by using the wireless communication module, to simplify a circuit design inside the electric vehicle, thereby implementing extreme simplification.

With reference to the first aspect, in a possible design, the vehicle-mounted charging connection apparatus further includes a charging connection confirm circuit and a second vehicle socket. The second vehicle socket includes a direct current socket and a charging connection confirm socket. One end of the direct current socket is configured to connect to a direct current plug of the charging connector, and the other end of the direct current socket is connected to the power battery. One end of the charging connection confirm socket is configured to connect to a connection confirm plug of the charging connector, and the other end of the charging connection confirm socket is connected to the charging connection confirm circuit. The vehicle-mounted charging connection apparatus is configured to determine the status of connection between the direct current socket and the direct current plug by using the charging connection confirm circuit.

With reference to the first aspect, in a possible design, the second vehicle socket further includes an auxiliary power socket. One end of the auxiliary power socket is configured to connect to an auxiliary power plug of the charging connector, and the other end of the auxiliary power socket is configured to receive a direct current. The second vehicle socket further includes a second communication socket. One end of the second communication socket is configured to connect to a communication plug of the charging connector, and the other end of the second communication socket is connected to the controller.

With reference to the first aspect, in a possible design, the vehicle-mounted charging connection apparatus is configured to: when the liquid cooling socket is successfully connected to the liquid cooling plug and the direct current socket is successfully connected to the direct current plug, send, to the charging pile, a packet that is used to request the charging pile to output a first charging power; or when the direct current socket is successfully connected to the direct current plug, send, to the charging pile, a packet that is used to request the charging pile to output a second charging power, where the second charging power is less than the first charging power.

In this embodiment of this application, the vehicle-mounted charging connection apparatus may selectively send, to the charging pile based on the status of connection between the liquid cooling socket and the liquid cooling plug, a packet for requesting the charging pile to output different charging powers, to meet the heat dissipation requirement of charging the power battery based on different charging powers.

According to a second aspect, an electric vehicle is provided. The electric vehicle includes a vehicle-mounted charging connection apparatus, a power battery, and a thermal management system. The thermal management system is used to dissipate heat for the power battery. The vehicle-mounted charging connection apparatus is used in an electric vehicle. The vehicle-mounted charging connection apparatus includes a first vehicle socket and a liquid cooling connection confirm circuit. The first vehicle socket includes a liquid cooling socket and a liquid cooling connection confirm socket. The first vehicle socket is configured to connect to a liquid cooling connector of a liquid cooling device. One end of the liquid cooling socket is configured to connect to a liquid cooling plug of the liquid cooling connector, and the other end of the liquid cooling socket is connected to the thermal management system of the power battery through a liquid cooling pipeline. The liquid cooling socket is configured to receive a coolant output by the liquid cooling plug, or the liquid cooling socket is configured to output a coolant to the liquid cooling plug. One end of the liquid cooling connection confirm socket is configured to connect to a liquid cooling connection confirm plug of the liquid cooling connector, and the other end of the liquid cooling connection confirm socket is connected to the liquid cooling connection confirm circuit. The electric vehicle is configured to determine a status of connection between the liquid cooling socket and the liquid cooling plug by using the liquid cooling connection confirm circuit; and in response to the liquid cooling socket being successfully connected to the liquid cooling plug, send, to the liquid cooling device, a packet indicating that the liquid cooling socket is successfully connected to the liquid cooling plug.

With reference to the second aspect, in a possible design, when the liquid cooling socket is connected to the liquid cooling plug, the liquid cooling connection confirm circuit connected to the liquid cooling connection confirm socket and a liquid cooling connection confirm circuit connected to the liquid cooling connection confirm plug form a current loop. The vehicle-mounted charging connection apparatus is configured to detect a voltage at a detection point in the current loop to determine the status of connection between the liquid cooling socket and the liquid cooling plug. In response to the voltage at the detection point in the liquid cooling connection confirm circuit reaching a vehicle-end preset value, the electric vehicle is configured to determine that the liquid cooling socket is successfully connected to the liquid cooling plug.

With reference to the second aspect, in a possible design, the vehicle socket further includes a ground socket. One end of the ground socket is configured to connect to a ground plug of a liquid cooling connector, and the other end of the ground socket is connected to a vehicle body ground platform. The liquid cooling connection confirm plug includes a first liquid cooling connection confirm plug and a second liquid cooling connection confirm plug. The liquid cooling connection confirm circuit includes a conducting wire. The first liquid cooling connection confirm plug is connected to the second liquid cooling connection confirm plug through the conducting wire. The liquid cooling connection confirm socket includes a first liquid cooling connection confirm socket and a second liquid cooling connection confirm socket. The liquid cooling connection confirm circuit includes a first resistor unit. The first liquid cooling connection confirm socket is connected to a voltage source through the first resistor unit, and the second liquid cooling connection confirm circuit is connected to the vehicle body ground platform.

With reference to the second aspect, in a possible design, in response to a voltage at a detection point between the first resistor unit and the first liquid cooling connection confirm socket reaching the vehicle-end preset value, the electric vehicle is configured to determine that the liquid cooling socket is successfully connected to the liquid cooling plug.

With reference to the second aspect, in a possible design, the vehicle socket further includes a ground socket. One end of the ground socket is configured to connect to a ground plug of the liquid cooling connector, and the other end of the ground socket is connected to a vehicle body ground platform. The liquid cooling connection confirm plug includes a first liquid cooling connection confirm plug and a second liquid cooling connection confirm plug. The liquid cooling connection confirm circuit includes a conducting wire. The first liquid cooling connection confirm plug is connected to the second liquid cooling connection confirm plug through the conducting wire. The liquid cooling connection confirm socket includes a first liquid cooling connection confirm socket and a second liquid cooling connection confirm socket. The liquid cooling connection confirm circuit includes a second resistor unit. The first liquid cooling connection confirm socket is connected to a voltage source, and the second liquid cooling connection confirm socket is connected to the vehicle body ground platform through the second resistor unit.

With reference to the second aspect, in a possible design, in response to a voltage at a detection point between the second resistor unit and the second liquid cooling connection confirm socket reaching the vehicle-end preset value, the electric vehicle is configured to determine that the liquid cooling socket is successfully connected to the liquid cooling plug.

With reference to the second aspect, in a possible design, the electric vehicle includes a traction apparatus. The traction apparatus is configured to draw the liquid cooling connector to move, so that the first vehicle socket is fully connected to the liquid cooling connector. The liquid cooling connection confirm socket further includes a third liquid cooling connection confirm socket. A distance between the second liquid cooling connection confirm socket and the plug/unplug end is equal to a distance between the third liquid cooling connection confirm socket and the plug/unplug end. A distance between the liquid inlet/outlet of the liquid cooling socket and the plug/unplug end is less than the distance between the third liquid cooling connection confirm socket and the plug/unplug end. The distance between the liquid inlet/outlet of the liquid cooling socket and the plug/unplug end is greater than or equal to a distance between the first liquid cooling connection confirm socket and the plug/unplug end.

With reference to the second aspect, in a possible design, the electric vehicle further includes a wireless communication module. The vehicle-mounted charging connection apparatus is configured to send a packet to the charging pile by using the wireless communication module.

With reference to the second aspect, in a possible design, the vehicle-mounted charging connection apparatus further includes a charging connection confirm circuit and a second vehicle socket. The second vehicle socket includes a direct current socket and a charging connection confirm socket. One end of the direct current socket is configured to connect to a direct current plug of the charging connector, and the other end of the direct current socket is connected to the power battery. One end of the charging connection confirm socket is configured to connect to a connection confirm plug of the charging connector, and the other end of the charging connection confirm socket is connected to the charging connection confirm circuit. The vehicle-mounted charging connection apparatus is configured to determine a status of connection between the direct current socket and the direct current plug by using the charging connection confirm circuit.

With reference to the second aspect, in a possible design, the second vehicle socket further includes an auxiliary power socket. One end of the auxiliary power socket is configured to connect to an auxiliary power plug of the charging connector, and the other end of the auxiliary power socket is configured to receive a direct current. The second vehicle socket further includes a second communication socket. One end of the second communication socket is configured to connect to a communication plug of the charging connector, and the other end of the second communication socket is connected to the controller.

With reference to the second aspect, in a possible design, the electric vehicle is configured to: when the liquid cooling socket is successfully connected to the liquid cooling plug and the direct current socket is successfully connected to the direct current plug, send, to the charging pile, a packet that is used to request the charging pile to output a first charging power; or when the direct current socket is successfully connected to the direct current plug, send, to the charging pile, a packet that is used to request the charging pile to output a second charging power, where the second charging power is less than the first charging power.

For beneficial effects of the second aspect, refer to the beneficial effects of the first aspect. Details are not described again.

According to a third aspect, a liquid cooling device is provided. The liquid cooling device includes a liquid cooling connector plug, a liquid cooling connection confirm circuit, and a liquid cooling system. The liquid cooling connector plug includes a liquid cooling plug and a liquid cooling connection confirm plug. One end of the liquid cooling plug is configured to connect to a liquid cooling socket of an electric vehicle, and the other end of the liquid cooling plug is connected to the liquid cooling system through a pipeline. One end of the liquid cooling connection confirm plug is configured to connect to a liquid cooling connection confirm socket of the electric vehicle, and the other end of the liquid cooling connection confirm plug is connected to the liquid cooling connection confirm circuit. The liquid cooling device is configured to receive the packet that indicates that the liquid cooling socket is successfully connected to the liquid cooling plug and that is sent by the electric vehicle. In response to the liquid cooling socket being successfully connected to the liquid cooling plug, the liquid cooling system is configured to output the coolant to the electric vehicle by using the liquid cooling plug.

In this embodiment of this application, the liquid cooling device may receive a packet that is sent by a vehicle-mounted charging connection apparatus and that is used to notify the liquid cooling device that the liquid cooling socket is successfully connected to the liquid cooling plug. The liquid cooling device does not need to determine a status of connection between the liquid cooling socket and the liquid cooling plug, to save a time for determining the status of connection between the socket and the plug, thereby improving efficiency. In addition, the liquid cooling device responds to the liquid cooling socket being successfully connected to the liquid cooling plug, and the liquid cooling system is configured to output a coolant to the electric vehicle by using the liquid cooling plug to cool the power battery, to resolve a heat dissipation problem during charging of the power battery, thereby increasing a charging power provided by the charging apparatus for the power battery.

With reference to the third aspect, in a possible design, when the liquid cooling plug is connected to the liquid cooling socket, the liquid cooling connection confirm circuit connected to the liquid cooling connection confirm plug and a liquid cooling connection confirm circuit connected to the liquid cooling connection confirm socket form a current loop, so that the electric vehicle determines a status of connection between the liquid cooling plug and the liquid cooling socket based on a voltage at a detection point in a liquid cooling connection confirm loop.

In this embodiment of this application, when the liquid cooling plug is connected to the liquid cooling socket, the liquid cooling connection confirm circuit connected to the liquid cooling connection confirm plug and the liquid cooling connection confirm circuit connected to the liquid cooling connection confirm socket form the current loop, to help the electric vehicle determine the status of connection between the liquid cooling plug and the liquid cooling socket based on the voltage at the detection point in the liquid cooling connection confirm loop.

With reference to the third aspect, in a possible design, the liquid cooling connection confirm plug includes a first liquid cooling connection confirm plug and a second liquid cooling connection confirm plug. The liquid cooling socket includes a first liquid cooling connection confirm socket and a second liquid cooling connection confirm socket. The first liquid cooling connection confirm socket is connected to a voltage source, and the second liquid cooling connection confirm socket is connected to a vehicle body ground platform through a resistor, so that the electric vehicle determines the status of connection between the liquid cooling socket and the liquid cooling plug by detecting a voltage at a detection point between the resistor and the second liquid cooling connection confirm socket. Alternatively, the first liquid cooling connection confirm socket is connected to a voltage source through a resistor, and the second liquid cooling connection confirm socket is connected to the vehicle body ground platform, so that the electric vehicle determines the status of connection between the liquid cooling socket and the liquid cooling plug by detecting a voltage at a detection point between the resistor and the first liquid cooling connection confirm socket. The liquid cooling connection confirm circuit includes a conducting wire. The first liquid cooling connection confirm plug is connected to the second liquid cooling connection confirm plug through the conducting wire.

With reference to the third aspect, in a possible design, the liquid cooling connection confirm plug further includes a third liquid cooling connection confirm plug. A distance between the second liquid cooling connection confirm plug and the plug/unplug end is equal to a distance between the third liquid cooling connection confirm plug and the plug/unplug end. A distance between the liquid inlet/outlet of the liquid cooling plug and the plug/unplug end is less than a distance between the third liquid cooling connection confirm plug and the plug/unplug end. The distance between the liquid inlet/outlet of the liquid cooling plug and the plug/unplug end is greater than or equal to a distance between the first liquid cooling connection confirm plug and the plug/unplug end.

In this embodiment of this application, when a contact of the first liquid cooling connection confirm socket is connected to a contact of the first liquid cooling connection confirm plug, it indicates that the liquid cooling socket and the liquid cooling plug are in a semi-connected state. The traction apparatus may draw the liquid cooling connector to move, so that the liquid cooling connector is close to the first vehicle socket. Finally, the liquid cooling connector and the first vehicle socket are in a fully connected state. A user does not need to manually push the liquid cooling connector, thereby improving user experience. In addition, the distance between the second liquid cooling connection confirm plug and the plug/unplug end is equal to the distance between the third liquid cooling connection confirm plug and the plug/unplug end. This can ensure that the liquid cooling device transmits the liquid cooling medium to the thermal management system of the power battery in time and can further avoid a misjudgment of the liquid cooling device.

With reference to the third aspect, in a possible design, the liquid cooling device further includes a wireless communication module. The liquid cooling device is configured to receive and send packets by using the wireless communication module.

In this embodiment of this application, the liquid cooling device may receive or send a packet by using the wireless communication module, to simplify a circuit design inside the liquid cooling device, thereby implementing extreme simplification.

According to a fourth aspect, a charging pile is provided. The charging pile includes a liquid cooling device, a power module, and a charging connector. The charging connector is connected to the power module. The charging connector is configured to charge an electric vehicle. The liquid cooling device includes a liquid cooling connector plug, a liquid cooling connection confirm circuit, and a liquid cooling system. The liquid cooling connector plug includes a liquid cooling plug and a liquid cooling connection confirm plug. One end of the liquid cooling plug is configured to connect to a liquid cooling socket of the electric vehicle, and the other end of the liquid cooling plug is connected to the liquid cooling system through a pipeline. One end of the liquid cooling connection confirm plug is configured to connect to a liquid cooling connection confirm socket of the electric vehicle, and the other end of the liquid cooling connection confirm plug is connected to the liquid cooling connection confirm circuit. The liquid cooling device is configured to receive a packet that indicates that the liquid cooling socket is successfully connected to the liquid cooling plug and that is sent by the electric vehicle. In response to the liquid cooling socket being successfully connected to the liquid cooling plug, the liquid cooling system is configured to output a coolant to the electric vehicle by using the liquid cooling plug.

With reference to the fourth aspect, in a possible design, when the liquid cooling plug is connected to the liquid cooling socket, the liquid cooling connection confirm circuit connected to the liquid cooling connection confirm plug and a liquid cooling connection confirm circuit connected to the liquid cooling connection confirm socket form a current loop, so that the electric vehicle determines a status of connection between the liquid cooling plug and the liquid cooling socket based on a voltage at a detection point in a liquid cooling connection confirm loop.

With reference to the fourth aspect, in a possible design, the liquid cooling connection confirm plug includes a first liquid cooling connection confirm plug and a second liquid cooling connection confirm plug. The liquid cooling socket includes a first liquid cooling connection confirm socket and a second liquid cooling connection confirm socket. The first liquid cooling connection confirm socket is connected to a voltage source, and the second liquid cooling connection confirm socket is connected to a vehicle body ground platform through a resistor, so that the electric vehicle determines the status of connection between the liquid cooling socket and the liquid cooling plug by detecting a voltage at a detection point between the resistor and the second liquid cooling connection confirm socket. Alternatively, the first liquid cooling connection confirm socket is connected to a voltage source through a resistor, and the second liquid cooling connection confirm socket is connected to the vehicle body ground platform, so that the electric vehicle determines the status of connection between the liquid cooling socket and the liquid cooling plug by detecting a voltage at a detection point between the resistor and the first liquid cooling connection confirm socket. The liquid cooling connection confirm circuit includes a conducting wire. The first liquid cooling connection confirm plug is connected to the second liquid cooling connection confirm plug through the conducting wire.

With reference to the fourth aspect, in a possible design, the liquid cooling connection confirm plug further includes a third liquid cooling connection confirm plug. A distance between the second liquid cooling connection confirm plug and the plug/unplug end is equal to a distance between the third liquid cooling connection confirm plug and the plug/unplug end. A distance between the liquid inlet/outlet of the liquid cooling plug and the plug/unplug end is less than a distance between the third liquid cooling connection confirm plug and the plug/unplug end. The distance between the liquid inlet/outlet of the liquid cooling plug and the plug/unplug end is greater than or equal to a distance between the first liquid cooling connection confirm plug and the plug/unplug end.

With reference to the fourth aspect, in a possible design, the charging pile further includes a wireless communication module. The charging pile is configured to receive and send packets by using the wireless communication module.

With reference to the fourth aspect, in a possible design, the charging device includes a charging connection confirm circuit and a charging plug. The charging plug includes a direct current plug and a charging connection confirm plug. One end of the direct current plug is configured to connect to a direct current socket of the electric vehicle, and the other end of the direct current plug is connected to a power conversion apparatus. One end of the charging connection confirm plug is configured to connect to a connection confirm plug of the electric vehicle, and the other end of the charging connection confirm plug is connected to the charging connection confirm circuit. The charging pile is configured to determine a status of connection between the direct current socket and the direct current plug by using the charging connection confirm circuit.

With reference to the fourth aspect, in a possible design, the charging plug further includes an auxiliary power plug. One end of the auxiliary power plug is configured to connect to an auxiliary power socket of the electric vehicle, and the other end of the auxiliary power plug is configured to send a direct current. The charging plug further includes a second communication plug. One end of the second communication plug is configured to connect to a communication socket of the electric vehicle, and the other end of the second communication plug is connected to the controller.

With reference to the fourth aspect, in a possible design, the charging pile is configured to: receive, from the vehicle-mounted charging connection apparatus, a packet that is used to request the charging pile to output a first power; or receive, from the vehicle-mounted charging connection apparatus, a packet that is used to request the charging pile to output a second power, where the second charging power is less than the first charging power.

For beneficial effects of the fourth aspect, refer to the beneficial effects of the third aspect. Details are not described again.

### BRIEF DESCRIPTION OF DRAWINGS

FIG. 1 is a diagram of a structure of a charging system according to an embodiment of this application;
FIG. 2 is a diagram of a structure of another charging system according to an embodiment of this application;
FIG. 3 is a diagram of a heat dissipation system according to an embodiment of this application;
FIG. 4 is a diagram of another heat dissipation system according to an embodiment of this application;
FIG. 5 is a diagram of still another heat dissipation system according to an embodiment of this application;
FIG. 6 is a diagram of yet another heat dissipation system according to an embodiment of this application;
FIG. 7 is a diagram of a structure of still another charging system according to an embodiment of this application;
FIG. 8 is a diagram of a liquid injection interface according to an embodiment of this application;
FIG. 9 is a diagram of another liquid injection interface according to an embodiment of this application;
FIG. 10 is a diagram of still yet another heat dissipation system according to an embodiment of this application;
FIG. 11 is a diagram of a further heat dissipation system according to an embodiment of this application; and
FIG. 12 is a diagram of still further heat dissipation system according to an embodiment of this application.

### DESCRIPTION OF EMBODIMENTS

The following describes technical solutions of embodiments in this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

Reference to "some embodiments" or the like described in this specification indicates that one or more embodiments of this application include a specific feature, structure, or characteristic described with reference to embodiments. Therefore, statements such as "in some embodiments" that appear at different places in this specification do not necessarily mean referring to a same embodiment, but mean "one or more but not all of embodiments", unless otherwise specifically emphasized in another manner. The terms "include", "have", and their variants all mean "include but are not limited to", unless otherwise specifically emphasized in another manner.

In this application, "equal" is not strictly equal, but within an allowable error range.

With the development of new energy vehicle technologies, many vehicle manufacturers gradually launch electric vehicles. Electric vehicles have become a choice for many users because of energy saving, environmental protection, and relatively mature technologies.

This application may be applied in a system in which a power supply apparatus and a load charge each other through a power distribution matrix. Especially, in a system including a charging pile and an electric vehicle, the charging pile may charge the electric vehicle by using electric energy that comes from a power grid, and the electric vehicle may also reversely output electric energy of the electric vehicle to the power grid.

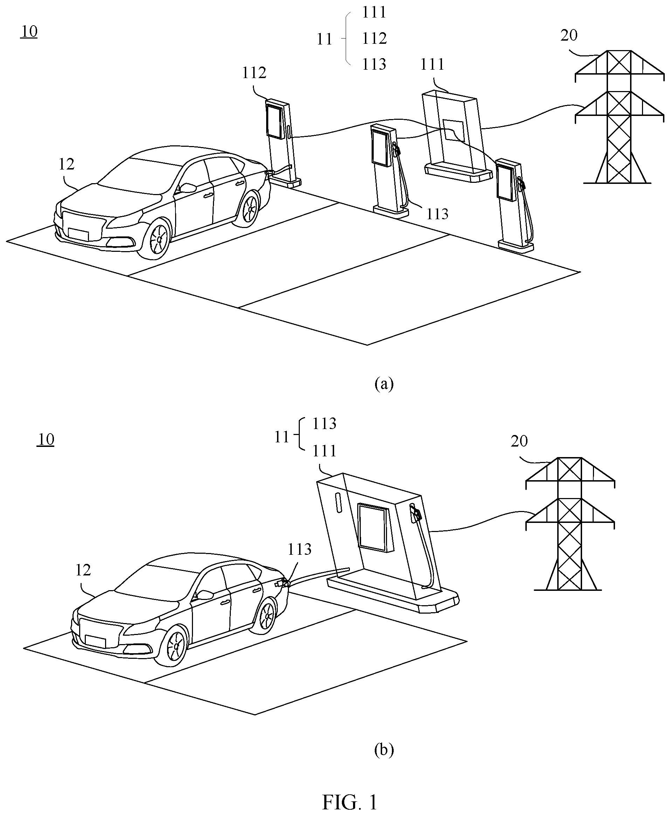

FIG. 1 is a diagram of an example structure of a charging system 10 according to an embodiment of this application.

With reference to (a) in FIG. 1 and (b) in FIG. 1, the charging system 10 may include a charging apparatus 11 and a vehicle 12.

In some embodiments, as shown in (a) in FIG. 1, the charging apparatus 11 may be a split-type apparatus. Specifically, the charging apparatus 11 may include a charging power unit 111, at least one charging dispenser 112, and at least one charging connector 113. The charging power unit 111 is electrically connected to each charging dispenser 112, each charging dispenser 112 is electrically connected to a charging connector 113 through a cable, and the charging connector 113 is configured to electrically connect to the electric vehicle 12.

The charging power unit 111 includes a plurality of power conversion apparatuses. The plurality of power conversion apparatuses may convert an alternating current from an external power grid 20 into a direct current, then transmit the stable direct current to the charging dispenser 112, and transmit the direct current to the electric vehicle 12 via the charging connector 113 electrically connected to the charging dispenser 112. The plurality of power conversion apparatuses may include, for example, an alternating current-direct current (alternating current-direct current, AC-DC) conversion apparatus and a direct current-direct current (direct current-direct current, DC-DC) conversion apparatus.

During specific implementation, a user may insert the charging connector 113 into a charging interface of the electric vehicle 12, so that the charging connector 113 is electrically connected to a power battery in the electric vehicle 12, and the charging power unit 111 can further charge the power battery of the electric vehicle 12 via the charging connector 113.

The charging dispenser 112 may include a housing, a human-machine interaction interface, a charging control unit, a metering and billing unit, and the like. The charging dispenser 112 may be configured to perform information exchange, energy transmission, metering and billing, and the like with the vehicle 12.

In some other embodiments, as shown in (b) in FIG. 1, the charging apparatus 11 may be an integrated charging apparatus. Specifically, the charging apparatus 11 may include only a charging power unit 111 and at least one charging connector 113 electrically connected to the charging power unit 111, and does not include a charging dispenser 112. A human-machine interaction interface, a charging control unit, a metering and billing unit, and the like may be directly disposed in the charging power unit 111. A plurality of power conversion apparatuses in the charging power unit 111 convert an alternating current from an external power grid 20 into a stable direct current, and then directly transmits the stable direct current to the electric vehicle 12 via the charging connector 113.

In the foregoing charging system 10, with a breakthrough in high-power charging technologies for batteries, the battery can be fully charged in a short time. However, in current actual application, when the charging apparatus 11 charges a power battery at a high power, heat generated by the power battery greatly increases accordingly. If the heat cannot be eliminated in time, normally charging the power battery by the charging apparatus 11 at the high power is affected.

The electric vehicle 12 usually has a thermal management system. The thermal management system can dissipate heat for the power battery. However, as a charging power increases, for example, in an ultra-fast charging scenario, the power battery generates more heat, effect of heat dissipation only via the thermal management system is limited, and a heat dissipation capability of the thermal management system cannot meet a heat dissipation requirement of the power battery during high-power charging.

Currently, although the power battery may be cooled by using an external cooling system, a connection port of the external cooling system is merely a single liquid inlet/outlet. When a charging pile charges the power battery, the electric vehicle and the external cooling system cannot identify whether the electric vehicle and the external cooling system are connected to each other. This affects normal high-power charging performed on the power battery by the charging pile.

On this basis, this application provides a charging system. The charging system includes a charging pile and an electric vehicle. The charging pile includes a charging apparatus and a liquid cooling device. When the charging apparatus charges a power battery of the electric vehicle at a high power, the liquid cooling device may transmit a coolant to a thermal management system of the power battery. Therefore, a heat dissipation problem during charging of the power battery can be resolved, and a charging power provided by the charging apparatus for the power battery can be increased.

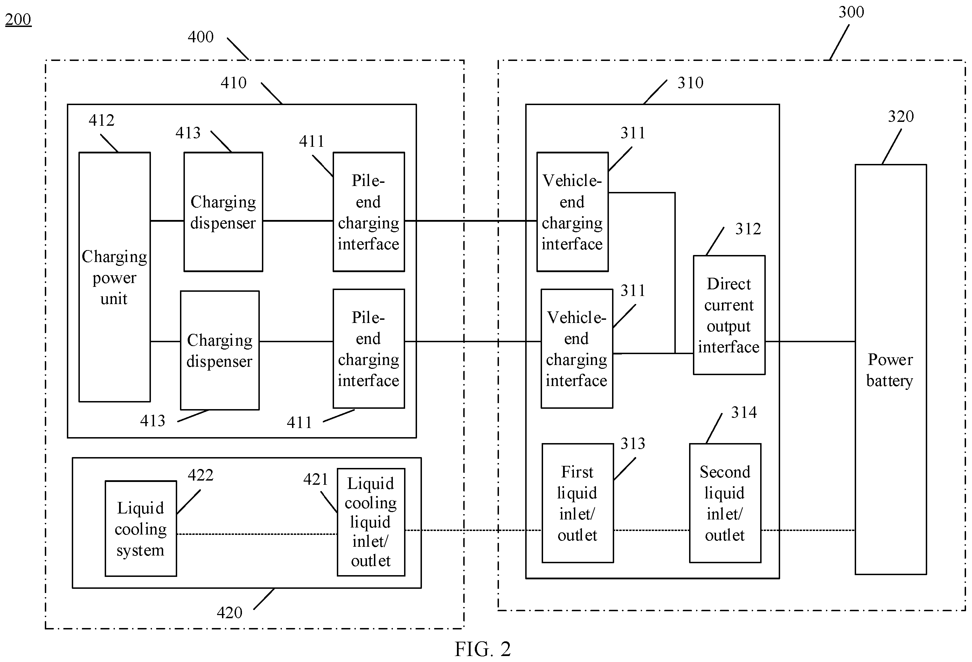

FIG. 2 is a diagram of a structure of a charging system 200 according to an embodiment of this application. It should be understood that, in FIG. 2, a thin solid line is used to represent a power transmission line, and a short dashed line is used to represent a pipeline connection line.

The charging system 200 may include an electric vehicle 300 and a charging pile 400. The electric vehicle 300 may include a vehicle-mounted charging connection apparatus 310 and a power battery 320. The charging pile 400 may include a charging apparatus 410 and a liquid cooling device 420.

It may be understood that the electric vehicle 300 may be the electric vehicle 12 shown in FIG. 1, and the charging apparatus 410 may be the split-type charging apparatus shown in (a) in FIG. 1 or the integrated charging apparatus shown in (b) in FIG. 1. For ease of description and understanding, in this embodiment of this application, an example in which the charging apparatus 410 is the split-type charging apparatus shown in (a) in FIG. 1 is used for description.

It may be further understood that the liquid cooling device 420 may be disposed outside the charging apparatus 410, or may be integrated with the charging apparatus 410. For ease of description and understanding, in this embodiment of this application, an example in which the liquid cooling device 420 is disposed outside the charging apparatus 410 is used for description.

Still with reference to FIG. 2, the vehicle-mounted charging connection apparatus 310 may include a vehicle-end charging interface 311, a direct current output interface 312, a first liquid inlet/outlet 313, and a second liquid inlet/outlet 314. The charging apparatus 410 may include a pile-end charging interface 411. The liquid cooling device 420 may include a liquid cooling system 422 and a liquid cooling liquid inlet/outlet 421.

The pile-end charging interface 411 may be configured to electrically connect to the vehicle-end charging interface 311, and the vehicle-end charging interface 311 is electrically connected to the power battery 320 through the direct current output interface 312, so that the charging apparatus 410 can perform power transmission with the power battery 320 by using the vehicle-mounted charging connection apparatus 310. For example, the charging apparatus 410 may output a direct current from the pile-end charging interface 411, and the vehicle-mounted charging connection apparatus 310 transmits, to the power battery 320 through the direct current output interface 312, the direct current that is output by the charging apparatus 410 from the pile-end charging interface 411, to charge the power battery 320. Alternatively, the power battery 320 may output a direct current to the direct current output interface 312, and the vehicle-mounted charging connection apparatus 310 may transmit, to the charging apparatus 410 through the vehicle-end charging interface 311, the direct current output by the power battery 320, so that the power battery 320 discharges the charging apparatus 410.

In some embodiments, there may be one or more pile-end charging interfaces 411 and one or more vehicle-end charging interfaces 311. During specific implementation, as shown in FIG. 2, the split-type charging apparatus 410 may include a charging power unit 412 and at least one charging dispenser 413 electrically connected to the charging power unit 412. Each charging dispenser 413 may be electrically connected to a charging connector (not shown in the figure) through a cable. The pile-end charging interface 411 may be a charging plug disposed in each charging connector. The vehicle-end charging interface 311 may be a charging socket disposed in the vehicle-mounted charging connection apparatus 310.

The liquid cooling liquid inlet/outlet 421 may be configured to connect to the first liquid inlet/outlet 313, and the first liquid inlet/outlet 313 may be connected to the power battery 320 through the second liquid inlet/outlet 314, so that the liquid cooling device 420 can transmit a liquid-phase cooling medium to the power battery 320 through the vehicle-mounted charging connection apparatus 310, to cool the power battery 320.

During specific implementation, the liquid cooling device 420 may include a liquid cooling system 422 and a liquid cooling connector (not shown in the figure) connected to the liquid cooling device 422. The liquid cooling liquid inlet/outlet 421 may be a liquid cooling connection plug disposed in the liquid cooling connector. The first liquid inlet/outlet 313 may be a liquid cooling connection socket disposed on the vehicle-mounted charging connection apparatus 310.

In this embodiment of this application, the separate vehicle-mounted charging connection apparatus 310 is disposed in the electric vehicle 300. The vehicle-mounted charging connection apparatus 310 has the vehicle-end charging interface 311 configured to electrically connect to the charging apparatus 410 and the first liquid inlet/outlet 313 connected to the liquid cooling device 420, so that the power battery 320 can be directly connected to both the charging apparatus 410 and the liquid cooling device 420 through the vehicle-mounted charging connection apparatus 310. In this way, when the charging apparatus 410 charges the power battery at a high power, the off-vehicle liquid cooling device 420 may be connected to the power battery 320, to meet a heat dissipation requirement of the power battery 320 during high-power charging. This helps improve a charging power of the power battery 320 and shortens charging duration of the electric vehicle.

This application mainly relates to identification of a status of connection between the liquid cooling device 420 and the power battery. Therefore, the following describes the solutions in this application by separately using the liquid cooling device and the electric vehicle as examples.

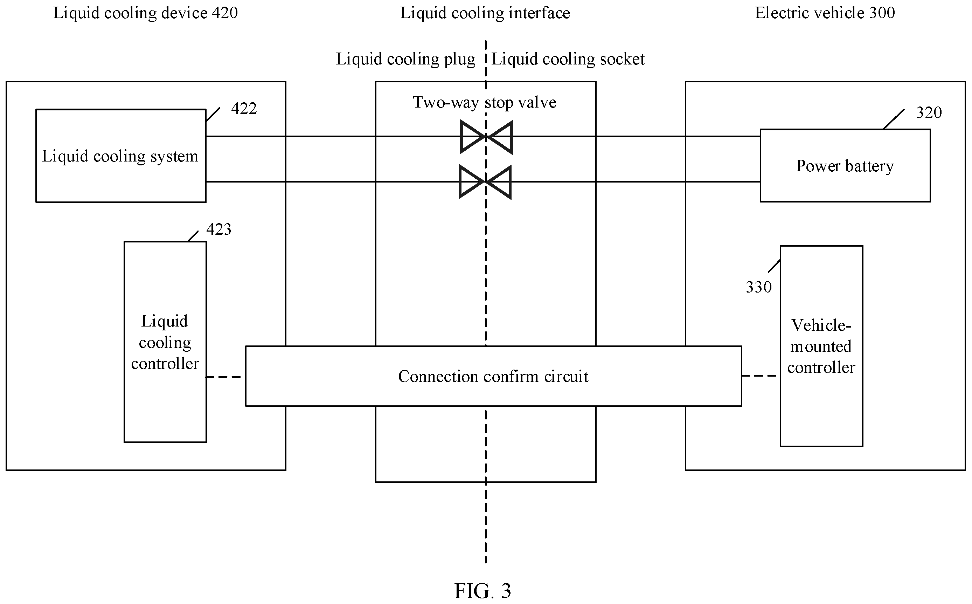

FIG. 3 is a diagram of a heat dissipation system according to an embodiment of this application. With reference to FIG. 3, the heat dissipation system includes an electric vehicle 300 and a liquid cooling device 420. A liquid cooling interface in FIG. 3 includes the liquid cooling liquid inlet/outlet 421 and the first liquid inlet/outlet 313 in FIG. 2. A liquid cooling plug may include a liquid cooling liquid inlet/outlet 412, and a liquid cooling socket includes a first liquid inlet/outlet 312. In addition, the liquid cooling plug may further include a connection confirm port and a connection confirm circuit connected to the connection confirm port, and the liquid cooling socket may further include a connection confirm port and a connection confirm circuit connected to the connection confirm port.

In an embodiment, the connection confirm circuit in the liquid cooling device may be connected to a liquid cooling controller 423, and the liquid cooling controller 423 determines a status of connection between the liquid cooling plug and the liquid cooling socket by using the connection confirm circuit in the liquid cooling device. A connection confirm circuit in the electric vehicle may be connected to a vehicle-mounted controller 330. The vehicle-mounted controller 330 determines the status of connection between the liquid cooling socket and the liquid cooling plug by using the connection confirm circuit in the electric vehicle.

The following provides descriptions by separately using a vehicle-mounted charging connection apparatus, an electric vehicle, a liquid cooling device, a charging pile, and a control guiding circuit as examples.

First, this application provides a vehicle-mounted charging connection apparatus. The vehicle-mounted charging connection apparatus is used in an electric vehicle. The vehicle-mounted charging connection apparatus includes a first vehicle socket and a liquid cooling connection confirm circuit. The first vehicle socket includes a liquid cooling socket and a liquid cooling connection confirm socket.

One end of the liquid cooling socket is configured to connect to a liquid cooling plug of a liquid cooling connector, and the other end of the liquid cooling socket is connected to a thermal management system of a power battery through a liquid cooling pipeline. The liquid cooling socket is configured to receive a coolant output by the liquid cooling plug, or the liquid cooling socket is configured to output a coolant to the liquid cooling plug. One end of the liquid cooling connection confirm socket is configured to connect to a liquid cooling connection confirm plug of the liquid cooling connector, and the other end of the liquid cooling connection confirm socket is connected to the liquid cooling connection confirm circuit.

The vehicle-mounted charging connection apparatus is configured to determine a status of connection between the liquid cooling socket and the liquid cooling plug by using the liquid cooling connection confirm circuit.

In this embodiment of this application, the liquid cooling socket may include a liquid inlet/outlet, that is, include a liquid inlet and a liquid outlet. The liquid inlet of the liquid cooling socket is connected to a liquid outlet of the liquid cooling plug, and the liquid outlet of the liquid cooling socket is connected to a liquid returning opening of the liquid cooling plug. Therefore, a cooling medium of the liquid cooling device is input to the thermal management system of the power battery through the liquid cooling plug and the liquid cooling socket, to cool the power battery.

In the conventional technologies, a connection port of an off-vehicle cooling system is merely a single liquid inlet/outlet. When a charging pile charges a power battery of an electric vehicle, the electric vehicle and the off-vehicle cooling system cannot identify whether the electric vehicle and the off-vehicle cooling system are connected to each other, which affects normal high-power charging performed on the power battery by the charging pile. The liquid cooling socket in this embodiment of this application further includes the liquid cooling connection confirm socket in addition to the liquid inlet/outlet. Because the liquid cooling connection confirm socket is connected to the liquid cooling connection confirm circuit, the vehicle-mounted charging connection apparatus may determine the status of connection between the liquid cooling socket and the liquid cooling plug by using the liquid cooling connection confirm circuit. In addition, when the liquid cooling socket is successfully connected to the liquid cooling plug, and the charging apparatus charges the power battery at a high power, the liquid cooling device injects the cooling medium into the thermal management system of the power battery to cool the power battery.

In an embodiment, when the liquid cooling socket is connected to the liquid cooling plug and a direct current socket is connected to a direct current plug, the liquid cooling connection confirm circuit of the vehicle-mounted charging connection apparatus and a liquid cooling connection confirm circuit form a current loop by using the liquid cooling connection confirm socket and the liquid cooling connection confirm plug.

The vehicle-mounted charging connection apparatus is configured to detect a voltage at a detection point in the liquid cooling connection confirm circuit, to determine the status of connection between the liquid cooling socket and the liquid cooling plug. In response to the voltage at the detection point in the liquid cooling connection confirm circuit reaching a vehicle-end preset value, the vehicle-mounted charging connection apparatus is configured to determine that the liquid cooling socket is successfully connected to the liquid cooling plug.

In this embodiment of this application, when the liquid cooling socket is connected to the liquid cooling plug, the liquid cooling connection confirm circuit and the liquid cooling connection confirm circuit of the liquid cooling device form the current loop by using the liquid cooling connection confirm socket and the liquid cooling connection confirm plug. A detection point may be set in the current loop. When a voltage at the detection point reaches the vehicle-end preset value, the vehicle-mounted charging connection apparatus determines that the liquid cooling socket is successfully connected to the liquid cooling plug.

Based on this design, the vehicle-mounted charging connection apparatus may determine the status of connection between the liquid cooling socket and the liquid cooling plug based on the voltage at the detection point. In addition, when the liquid cooling socket is successfully connected to the liquid cooling plug, and the charging pile charges the power battery at a high power, a liquid cooling system may inject the cooling medium into the power battery to cool the power battery, to meet a heat dissipation requirement of the power battery during high-power charging. This helps improve the charging power of the power battery and shortens charging duration of the electric vehicle.

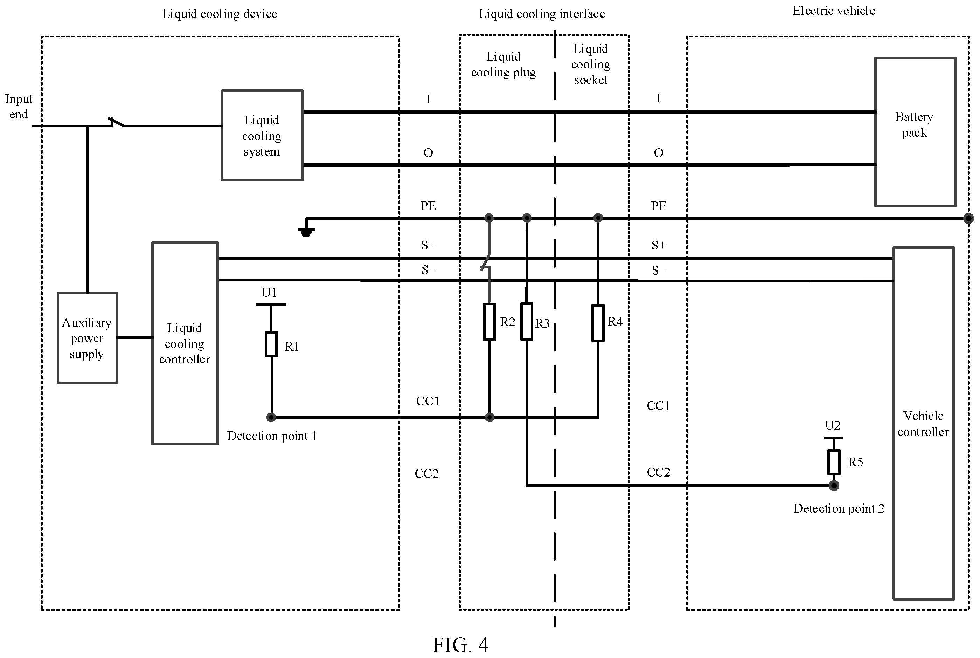

The vehicle-end preset value in this embodiment of this application is related to a specific circuit form of the liquid cooling connection confirm circuit and a location of the detection point. For details, refer to the following content about FIG. 4 to FIG. 7.

With reference to the accompanying drawings, the following describes the specific circuit form of the liquid cooling connection confirm circuit and a policy for determining the status of connection between the liquid cooling socket and the liquid cooling plug by the vehicle-mounted charging connection apparatus.

In an embodiment, the liquid cooling connection confirm socket includes a first liquid cooling connection confirm socket, the liquid cooling connection confirm circuit includes a first liquid cooling connection confirm circuit, and the first liquid cooling connection confirm socket is connected to the first liquid cooling connection confirm circuit.

The first liquid cooling connection confirm circuit includes a first resistor unit. The first liquid cooling connection confirm socket is connected to a voltage source through the first resistor unit.

That in response to the voltage at the detection point in the liquid cooling connection confirm circuit reaching the first vehicle-end preset value, the vehicle-mounted charging connection apparatus is configured to determine that the liquid cooling socket is successfully connected to the liquid cooling plug includes: in response to a voltage at a detection point between the first resistor unit and the first liquid cooling connection confirm socket reaching the first vehicle-end preset value, the vehicle-mounted charging connection apparatus is configured to determine that the liquid cooling socket is successfully connected to the liquid cooling plug.

FIG. 4 is a diagram of a heat dissipation system according to an embodiment of this application. The first resistor unit includes a resistor R5. The first liquid cooling connection confirm socket is a socket corresponding to a CC2 port. The voltage source is U2. The detection point between the first resistor unit and the first liquid cooling connection confirm socket is a detection point 2.

Before the liquid cooling socket is connected to the liquid cooling plug, because the detection point 2 is connected to the voltage source U2, a voltage at the detection point 2 is a voltage output by the voltage source U2. Only when the liquid cooling socket is connected to the liquid cooling plug, the voltage source U2, the resistor R5 in the electric vehicle, a resistor R3 in the charging pile, and a ground cable in the charging pile form a loop. Because of a voltage division function of the resistors, the voltage at the detection point 2 reaches the first vehicle-end preset value.

For example, if the voltage output by the voltage source U2 is set to 12 V, and resistance values of R3 and R5 are equal, the first vehicle-end preset value is 6 V. In this design, if the voltage at the detection point 2 is 6 V, the vehicle-mounted charging connection apparatus identifies that the liquid cooling socket and the liquid cooling plug are in a connected state.

For another example, the voltage output by the voltage source U2 is still set to 12 V, but resistance values of R3 and R5 are not equal. For example, if R3 is 2 Ω, and R5 is 4 Ω, the first vehicle-end preset value is 4 V. In this design, if the voltage at the detection point 2 is 4 V, the vehicle-mounted charging connection apparatus identifies that the liquid cooling socket and the liquid cooling plug are in a connected state.

Therefore, based on the foregoing analysis, when the voltage at the detection point 2 is the voltage output by the voltage source U2, the vehicle-mounted charging connection apparatus can identify that the liquid cooling socket is not connected to the liquid cooling plug. When the voltage at the detection point 2 reaches the first vehicle-end preset value, the vehicle-mounted charging connection apparatus can identify that the liquid cooling socket is connected to the liquid cooling plug.

In this embodiment of this application, because the detection point set in this application is connected to the voltage source in the electric vehicle, when the voltage at the detection point is the voltage output by the voltage source, the vehicle-mounted charging connection apparatus identifies that the liquid cooling socket is not connected to the liquid cooling plug. When the voltage at the detection point reaches the first vehicle-end preset value, the vehicle-mounted charging connection apparatus identifies that the liquid cooling socket is connected to the liquid cooling plug. The status of connection between the liquid cooling socket and the liquid cooling plug is identified based on the voltage at the detection point, to improve accuracy of identifying the status of connection between the liquid cooling socket and the liquid cooling plug by the vehicle-mounted charging connection apparatus, thereby meeting a heat dissipation requirement of the power battery during high-power charging. This helps improve the charging power of the power battery and shortens the charging duration of the electric vehicle.

According to the description in the foregoing embodiment, when the voltage at the detection point 2 reaches the first vehicle-end preset value, the vehicle-mounted charging connection apparatus determines that the liquid cooling socket and the liquid cooling plug are in the connected state. In addition, the vehicle-mounted charging connection apparatus may further determine a status of connection between the first resistor unit and the voltage source based on a specific voltage value at the detection point 2.

For example, if good internal contact is achieved in the electric vehicle, because the detection point 2 is located between the resistor R5 and the resistor R3, due to the voltage division function of the resistors, the voltage at the detection point 2 should be greater than 0 and less than the voltage output by the voltage source (that is, the first vehicle-end preset value). For example, if the voltage output by the voltage source is 12 V, and the resistance values of R5 and R3 are equal, the voltage at the detection point 2 is 6 V.

If poor internal contact exists in the electric vehicle, for example, R5 is not connected to the voltage source U2 and is in a suspended state. It is equivalent to a case in which R5 and R3 are directly connected to the ground cable in the liquid cooling device. A voltage at any detection point on a branch circuit including R5, R3, and the ground cable is 0 V. Because the detection point 2 is located on the branch circuit including the resistor R5, the resistor R3, and the ground cable, the voltage at the detection point 2 is 0 V.

Therefore, the vehicle-mounted charging connection apparatus may further determine an internal connection status of the electric vehicle based on the voltage at the detection point 2, to help improve safety of the electric vehicle.

In an embodiment, the vehicle socket further includes a ground socket. One end of the ground socket is configured to connect to a ground plug of the liquid cooling connector, and the other end of the ground socket is connected to a vehicle body ground platform.

The liquid cooling connection confirm socket further includes a second liquid cooling connection confirm socket. The liquid cooling connection confirm circuit further includes a second liquid cooling connection confirm circuit. The second liquid cooling connection confirm socket is connected to the second liquid cooling connection confirm circuit.

The second liquid cooling connection confirm circuit includes a second resistor unit. The second liquid cooling connection confirm socket is connected to the vehicle body ground platform through the second resistor unit.

In an embodiment, that in response to the voltage at the detection point in the liquid cooling connection confirm circuit reaching the first vehicle-end preset value, the vehicle-mounted charging connection apparatus is configured to determine that the liquid cooling socket is successfully connected to the liquid cooling plug includes: in response to a voltage at a detection point between the first resistor unit and the first liquid cooling connection confirm socket reaching the first vehicle-end preset value, and a voltage at a detection point between the second resistor unit and the second liquid cooling connection confirm socket reaching the second vehicle-end preset value, the vehicle-mounted charging connection apparatus is configured to determine that the liquid cooling socket is successfully connected to the liquid cooling plug.

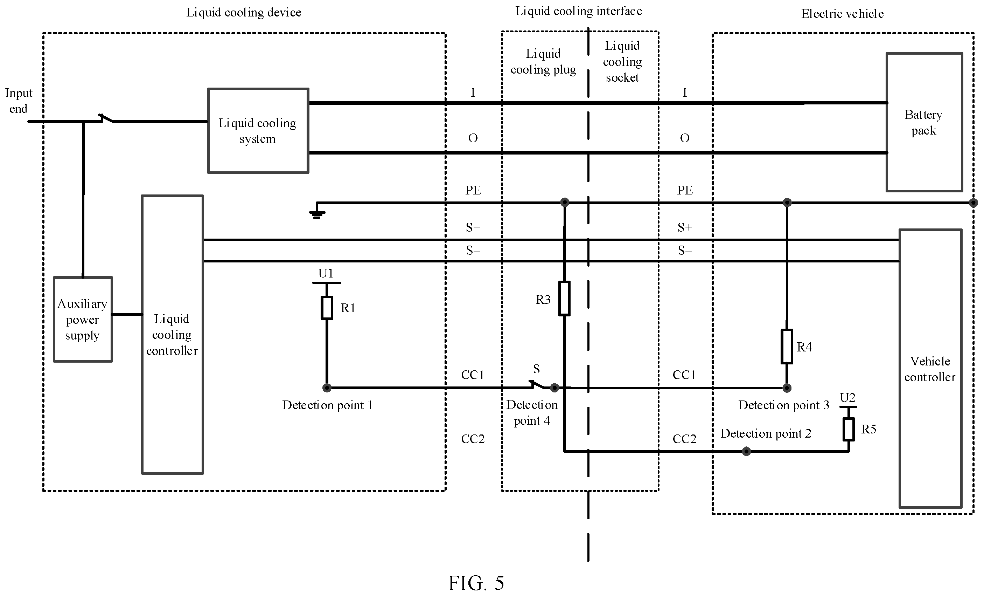

FIG. 5 is a diagram of another heat dissipation system according to an embodiment of this application. The second resistor unit includes a resistor R4. The second liquid cooling connection confirm socket is a socket corresponding to a CC1 port. The detection point between the second resistor unit and the second liquid cooling connection confirm socket is a detection point 3.

Before the liquid cooling socket is connected to the liquid cooling plug, because the detection point 3 is connected to a vehicle electric platform, a voltage at the detection point 3 is 0 V. Only when the liquid cooling socket is connected to the liquid cooling plug, a voltage source U1 in the charging pile, a resistor R1, and the resistor R4 in the electric vehicle form a loop. Because of a voltage division function of the resistors, the voltage at the detection point 3 reaches the second vehicle-end preset value.

For example, if the voltage output by the voltage source U1 is set to 12 V, and resistance values of R1 and R4 are equal, the second vehicle-end preset value is 6 V. In this design, if the voltage at the detection point 3 is 6 V, the vehicle-mounted charging connection apparatus identifies that the liquid cooling socket and the liquid cooling plug are in a connected state.

For another example, the voltage output by the voltage source U1 is still set to 12 V, but resistance values of R1 and R4 are not equal. For example, if R1 is 2 Ω, and R4 is 4 Ω, the second vehicle-end preset value is 8 V. In this design, if the voltage at the detection point 3 is 8 V, the vehicle-mounted charging connection apparatus identifies that the liquid cooling socket and the liquid cooling plug are in a connected state.

Therefore, based on the foregoing analysis, when the voltage at the detection point 2 is the voltage output by the voltage source U2 and the voltage at the detection point 3 is 0 V, the vehicle-mounted charging connection apparatus can identify that the liquid cooling socket is not connected to the liquid cooling plug. When the voltage at the detection point 2 reaches the first vehicle-end preset value and the voltage at the detection point 3 reaches the second vehicle-end preset value, the vehicle-mounted charging connection apparatus can identify that the liquid cooling socket is successfully connected to the liquid cooling plug.

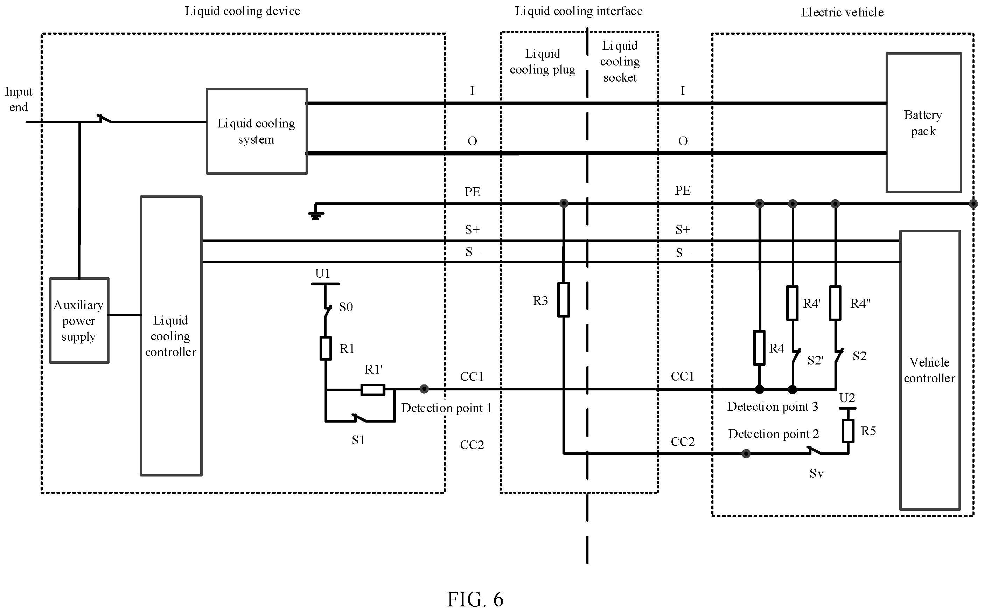

FIG. 6 is a diagram of another heat dissipation system according to an embodiment of this application. The first resistor unit includes R5 and a switch SV. The first liquid cooling connection confirm socket is still a socket corresponding to a CC2 port. The detection point between the first resistor unit and the first liquid cooling connection confirm socket is a detection point 2. The second resistor unit includes R4, R4', R4", and switches S2 and S2'. The second liquid cooling connection confirm socket is a socket corresponding to a CC1 port. The detection point between the second resistor unit and the second liquid cooling connection confirm socket is a detection point 3. A specific identification process is similar to that in FIG. 5. For brevity, details are not described again.

In this embodiment of this application, the status of connection between the liquid cooling socket and the liquid cooling plug is identified based on the voltages at the two detection points, to further improve accuracy of identifying the status of connection between the liquid cooling socket and the liquid cooling plug by the vehicle-mounted charging connection apparatus, thereby meeting a heat dissipation requirement of the power battery during high-power charging. This helps improve the charging power of the power battery and shortens the charging duration of the electric vehicle.

In some embodiments, the vehicle-mounted charging connection apparatus may determine the status of connection between the liquid cooling socket and the liquid cooling plug only based on the voltage at the detection point 3. A specific determining process has been described in the foregoing embodiment. Details are not described herein again.

On this basis, the foregoing describes, from a perspective of the vehicle-mounted charging connection apparatus, different embodiments in which the vehicle-mounted charging connection apparatus determines the status of connection between the liquid cooling socket and the liquid cooling plug. The following describes these embodiments from a perspective of the liquid cooling device.

This application provides a liquid cooling device. The liquid cooling device includes a liquid cooling connector plug, a liquid cooling connection confirm circuit, and a liquid cooling system. The liquid cooling connector plug includes a liquid cooling plug and a liquid cooling connection confirm plug. One end of the liquid cooling plug is configured to connect to a liquid cooling socket of an electric vehicle, and the other end of the liquid cooling plug is connected to the liquid cooling system.

One end of the liquid cooling connection confirm plug is configured to connect to a liquid cooling connection confirm socket of the electric vehicle, and the other end of the liquid cooling connection confirm plug is connected to the liquid cooling connection confirm circuit.

The liquid cooling device is configured to determine a status of connection between the liquid cooling plug and the liquid cooling socket by using the liquid cooling connection confirm circuit.

In this embodiment of this application, the liquid cooling device and a charging apparatus may be integrated, or the liquid cooling device and a charging apparatus may be designed in a split manner. This is not limited.

The liquid cooling device in this embodiment of this application includes the liquid cooling connector plug. The liquid cooling connector plug includes the liquid cooling plug and the liquid cooling connection confirm plug. When the liquid cooling plug is successfully connected to the liquid cooling socket of the electric vehicle, a cooling medium in the liquid cooling device may enter the electric vehicle through the liquid cooling plug, to cool a power battery.

In the conventional technologies, a connection port of an off-vehicle cooling system is merely a single liquid inlet/outlet. When a charging pile charges a power battery of an electric vehicle, the electric vehicle and the off-vehicle cooling system cannot identify whether the electric vehicle and the off-vehicle cooling system are connected to each other, which affects normal high-power charging performed on the power battery by the charging pile. The liquid cooling plug in this embodiment of this application further includes the liquid cooling connection confirm plug in addition to the liquid inlet/outlet. Because the liquid cooling connection confirm plug is connected to the liquid cooling connection confirm circuit, the liquid cooling device may determine the status of connection between the liquid cooling socket and the liquid cooling plug by using the liquid cooling connection confirm circuit. In addition, when the liquid cooling socket is successfully connected to the liquid cooling plug, and the charging apparatus charges the power battery at a high power, the liquid cooling device injects the cooling medium into the power battery to cool the power battery.

In an embodiment, when the liquid cooling plug is connected to the liquid cooling socket, the liquid cooling connection confirm circuit and a liquid cooling connection confirm circuit of the electric vehicle form a current loop by using the liquid cooling connection confirm plug and the liquid cooling connection confirm socket, and the liquid cooling device is configured to detect a voltage at a detection point in the liquid cooling connection confirm circuit to determine the status of connection between the liquid cooling plug and the liquid cooling socket.

In response to the voltage at the detection point reaching a pile-end preset value, the liquid cooling device determines that the liquid cooling plug is successfully connected to the liquid cooling socket.

In this embodiment of this application, when the liquid cooling plug is successfully connected to the liquid cooling socket, the connection confirm circuit and a connection confirm circuit of the charging pile form a current loop by using the connection confirm socket and the connection confirm plug. A detection point may be set in the current loop. When a voltage at the detection point reaches the pile-end preset value, the liquid cooling device determines that the liquid cooling plug is successfully connected to the liquid cooling socket.

In this design, the liquid cooling device may determine the status of connection between the liquid cooling socket and the liquid cooling plug based on the voltage at the detection point. In addition, when the liquid cooling socket is successfully connected to the liquid cooling plug, and the charging pile charges the power battery at a high power, the liquid cooling device may inject the cooling medium into the power battery to cool the power battery, to meet a heat dissipation requirement of the power battery during high-power charging. This helps improve the charging power of the power battery and shortens charging duration of the electric vehicle.

The pile-end preset value in this embodiment of this application is related to a specific circuit form of the connection confirm circuit and a location of the detection point. For details, refer to the following content about FIG. 4 to FIG. 6.

With reference to the accompanying drawings, the following describes the specific circuit form of the liquid cooling connection confirm circuit and a policy for determining the status of connection between the liquid cooling socket and the liquid cooling plug by the liquid cooling device.

In an embodiment, the liquid cooling connection confirm plug includes a first liquid cooling connection confirm plug and a second liquid cooling connection confirm plug, the liquid cooling connection confirm circuit includes a third resistor unit, and the second liquid cooling connection confirm plug is connected to a voltage source through the third resistor unit.

In an embodiment, the liquid cooling device is configured to determine the status of connection between the liquid cooling plug and the liquid cooling socket based on a voltage at a detection point between the third resistor unit and the second liquid cooling connection confirm plug.

In response to the voltage at the detection point between the third resistor unit and the second liquid cooling connection confirm plug reaching the pile-end preset value, the liquid cooling device is configured to determine that the liquid cooling plug is successfully connected to the liquid cooling socket.

With reference to FIG. 4, in this embodiment of this application, the third resistor unit is R1, the voltage source is still U1, and detection between the third resistor unit and the second liquid cooling connection confirm plug is the detection point 1. Before the liquid cooling socket is connected to the liquid cooling plug, because the detection point 1 is connected to the voltage source U1, a voltage at the detection point 1 is a voltage output by the voltage source U1. Only when the liquid cooling socket is connected to the liquid cooling plug, a current of the voltage source U1 flows through the resistor R1 in the direct current device, the resistor R4 in the electric vehicle, and the ground cable in the electric vehicle to form a loop. Because the detection point 1 is located between the resistor R1 and the resistor R4, the voltage at the detection point 1 can reach the pile-end preset value because of the voltage division function of the resistor.

For example, if the voltage output by the voltage source U1 is set to 12 V, and resistance values of R1 and R4 are equal, the pile-end preset value is 6 V. In this design, if the voltage at the detection point 1 is 6 V, the liquid cooling device identifies that the liquid cooling socket and the liquid cooling plug are in a connected state.

For another example, the voltage output by the voltage source U1 is still set to 12 V, but resistance values of R1 and R4 are not equal. For example, if R1 is 2 Ω, and R4 is 4 Ω, the pile-end preset value is 8 V. In this design, if the voltage at the detection point 1 is 8 V, the liquid cooling device identifies that the liquid cooling socket and the liquid cooling plug are in a connected state.

Based on the foregoing analysis, when the voltage at the detection point 1 is the voltage output by the voltage source U1, the liquid cooling device can identify that the liquid cooling socket is not connected to the liquid cooling plug. When the voltage at the detection point 1 is the pile-end preset value, the liquid cooling device can identify that the liquid cooling socket is successfully connected to the liquid cooling plug.

The third resistor unit shown in FIG. 5 is similar to that in FIG. 4, and a specific identification process is similar to that in FIG. 4. Details are not described again.

Still with reference to FIG. 6, the fourth resistor unit in this embodiment of this application includes R1, R1', a switch S1, and a switch S0, the voltage source is still U1, and the detection point between the third resistor unit and the second connection confirm plug is still a detection point 1. A specific identification process is similar to that in FIG. 4. For brevity, details are not described again.

In this embodiment of this application, because the detection point set in this application is connected to the voltage source in the liquid cooling device, when the voltage at the detection point is the voltage output by the voltage source, the liquid cooling device identifies that the liquid cooling socket is not connected to the liquid cooling plug. When the voltage at the detection point reaches the pile-end preset value, the liquid cooling device identifies that the liquid cooling socket is successfully connected to the liquid cooling plug. The status of connection between the liquid cooling socket and the liquid cooling plug may be identified based on the voltage at the detection point, to improve accuracy of identifying the status of connection between the liquid cooling socket and the liquid cooling plug by the liquid cooling device. In addition, when the charging apparatus charges the power battery at a high power, the liquid cooling device injects the cooling medium into the power battery to cool the power battery, to meet a heat dissipation requirement of the power battery during high-power charging. This helps improve the charging power of the power battery and shortens charging duration of the electric vehicle.

In an embodiment, the liquid cooling connection confirm circuit further includes a normally closed switch, and the normally closed switch is located between the third resistor unit and the second liquid cooling connection confirm plug.

That the liquid cooling device is configured to determine the status of connection between the liquid cooling plug and the liquid cooling socket based on the voltage at the detection point between the third resistor unit and the second liquid cooling connection confirm plug includes: in response to a voltage at a detection point between the third resistor unit and the normally closed switch reaching the pile-end preset value, and a voltage at a detection point between the normally closed switch and the second liquid cooling connection confirm plug reaching the pile-end preset value, the liquid cooling device is configured to determine that the liquid cooling plug is successfully connected to the liquid cooling socket.

With reference to FIG. 5, in this embodiment of this application, the third resistor unit is R1, the normally closed switch is S, the voltage source is still U1, detection between the third resistor unit and the normally closed switch is the detection point 1, and the detection point between the normally closed switch and the second liquid cooling connection confirm plug is a detection point 4.

Before the liquid cooling socket is connected to the liquid cooling plug, because the detection point 1 is connected to the voltage source U1 and the switch S is a normally closed switch, both the voltage at the detection point 1 and a voltage at the detection point 4 are the voltage output by the voltage source U1. Only when the liquid cooling socket is connected to the liquid cooling plug, a current of the voltage source U1 flows through the resistor R1 in the direct current device, the resistor R4 in the electric vehicle, and the ground cable in the electric vehicle to form a loop. Because the detection point 1 is located between the resistor R1 and the resistor R4, the voltage at the detection point 1 and the voltage at the detection point 4 can reach the pile-end preset value because of the voltage division function of the resistor. In another possible case, the liquid cooling socket is connected to the liquid cooling plug, but the switch S is in an off state. In this case, the detection point 1 is connected to the voltage source U1, and the detection point 4 is connected to the ground cable in the electric vehicle. As a result, the voltage at the detection point 1 is the voltage output by the voltage source U1, and the voltage at the detection point 4 is 0 V.

For example, if the voltage output by the voltage source U1 is set to 12 V, and resistance values of R1 and R4 are equal, the pile-end preset value is 6 V. In this design, if the voltage at the detection point 1 is 6 V, the liquid cooling device identifies that the liquid cooling socket is successfully connected to the liquid cooling plug. If the voltage at the detection point 1 is 12 V, and the voltage at the detection point 4 is 0 V, it indicates that the liquid cooling socket and the liquid cooling plug are in a connected state, but the switch S is turned off.

For another example, the voltage output by the voltage source U1 is still set to 12 V, but resistance values of R1 and R4 are not equal. For example, if R1 is 2 Ω, and R4 is 4 Ω, the pile-end preset value is 8 V. In this design, if the voltage at the detection point 1 is 8 V, the liquid cooling device identifies that the liquid cooling socket and the liquid cooling plug are in a connected state. If the voltage at the detection point 1 is 12 V, and the voltage at the detection point 4 is 0 V, it indicates that the liquid cooling socket and the liquid cooling plug are in a connected state, but the switch S is turned off.

Based on the foregoing analysis, when the voltage at the detection point 1 and the voltage at the detection point 4 are the voltage output by the voltage source U1, the liquid cooling device can identify that the liquid cooling socket is not connected to the liquid cooling plug. When the voltage at the detection point 1 and the voltage at the detection point 4 are the pile-end preset value, the liquid cooling device can identify that the liquid cooling socket is successfully connected to the liquid cooling plug. When the voltage at the detection point 1 is the voltage output by the voltage source U1 and the voltage at the detection point 4 is 0 V, the liquid cooling device identifies that the liquid cooling socket is connected to the liquid cooling plug but the switch S is in the off state.

In this embodiment of this application, the status of connection between the liquid cooling socket and the liquid cooling plug may be identified based on the voltages at the two detection points, to further improve accuracy of identifying the status of connection between the liquid cooling socket and the liquid cooling plug by the liquid cooling device. In addition, when the charging apparatus charges the power battery at a high power, the liquid cooling device injects the cooling medium into the power battery to cool the power battery, to meet a heat dissipation requirement of the power battery during high-power charging. This helps improve the charging power of the power battery and shortens charging duration of the electric vehicle.

From the perspectives of the vehicle-mounted charging connection apparatus and the liquid cooling device, the foregoing separately describes determining of the status of connection between the liquid cooling plug and the liquid cooling socket. In addition to determining the status of connection between the liquid cooling socket and the liquid cooling plug, the vehicle-mounted charging connection apparatus may further determine a status of connection between the direct current socket and the direct current plug.

In an embodiment, the vehicle-mounted charging connection apparatus further includes a charging connection confirm circuit and a second vehicle socket. The second vehicle socket includes a direct current socket and a charging connection confirm socket. One end of the direct current socket is configured to connect to a direct current plug of the charging connector, and the other end of the direct current socket is connected to the power battery. One end of the charging connection confirm socket is configured to connect to a connection confirm plug of the charging connector, and the other end of the charging connection confirm socket is connected to the charging connection confirm circuit.

The vehicle-mounted charging connection apparatus is configured to determine the status of connection between the direct current socket and the direct current plug by using the charging connection confirm circuit.

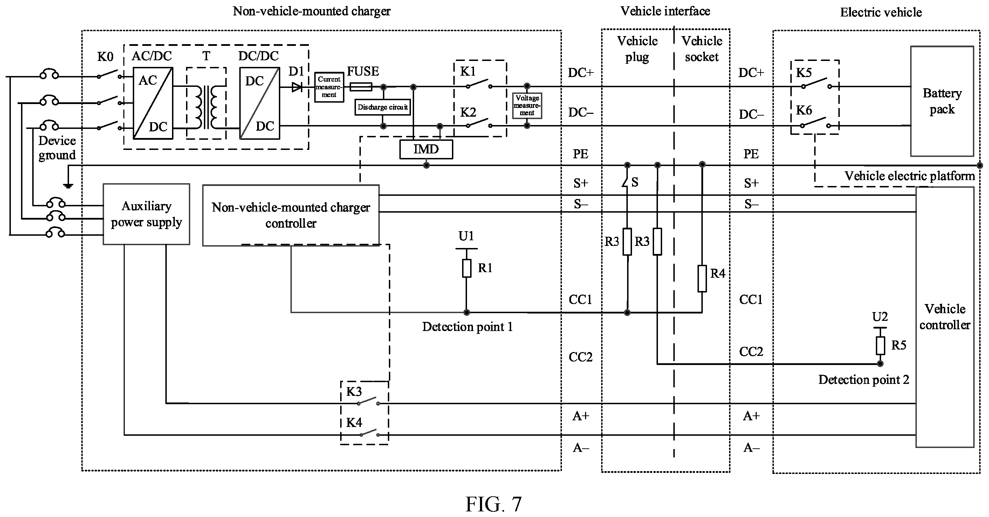

For details about determining of the status of connection between the direct current socket and the direct current plug, refer to content of related standards. With reference to FIG. 7, the following briefly describes determining of the status of connection between the direct current plug and the direct current socket by the vehicle-mounted charging connection apparatus and the charging pile.

With reference to FIG. 7, the vehicle-mounted charging connection apparatus may determine the status of connection between the direct current plug and the direct current socket based on the voltage at the detection point 2. The charging pile may determine the status of connection between the direct current plug and the direct current socket based on the voltage at the detection point 1.

Before the direct current socket is connected to the direct current plug, because the detection point 2 is connected to the voltage source U2 and the detection point 1 is connected to the voltage source U1, the voltage at the detection point 2 is the voltage output by the voltage source U2, and the voltage at the detection point 1 is the voltage output by the voltage source U1. Only when the direct current socket is connected to the direct current plug, the voltage source U2, the resistor R5 in the electric vehicle, the resistor R3 in the charging pile, and the ground cable in the charging pile form a loop, and the voltage source U1, R1, R4, and the ground cable in the electric vehicle form a loop. Because of the voltage division function of the resistor, the voltage at the detection point 2 is a preset value between 0 and U2, and the voltage at the detection point 1 is a preset value between 0 and U1.

For example, the voltages output by the voltage sources U1 and U2 are set to 12 V, the resistance values of R1 and R4 are equal, and the resistance values of R3 and R5 are equal. In this design, if the voltage at the detection point 2 is 6 V, the vehicle-mounted charging connection apparatus identifies that the direct current socket is successfully connected to the direct current plug. If the voltage at the detection point 1 is 6 V, the charging pile identifies that the direct current socket is successfully connected to the direct current plug.

It should be understood that the values shown in the foregoing embodiment are merely examples for description. For a specific value of the voltage source and a resistance value of the resistor, refer to a related standard.

In an embodiment, the second vehicle socket further includes an auxiliary power socket. One end of the auxiliary power socket is configured to connect to an auxiliary power plug of the charging connector, and the other end of the auxiliary power socket is configured to receive a direct current. The second vehicle socket further includes a second communication socket. One end of the second communication socket is configured to connect to a communication plug of the charging connector, and the other end of the second communication socket is connected to the controller.

In this embodiment of this application, the auxiliary power socket in the second vehicle socket may be sockets corresponding to A+ and A- in FIG. 7. The second communication socket is sockets corresponding to S+ and S- in FIG. 7. Packet transmission may be performed between the charging pile and the electric vehicle through the second communication socket and the second communication plug. For a specific description, refer to related content of A+, A-, S+, and S- in a charging standard. Details are not described again.

In an embodiment, the vehicle-mounted charging connection apparatus is configured to: when the liquid cooling socket is successfully connected to the liquid cooling plug and the direct current socket is successfully connected to the direct current plug, send, to the charging pile, a packet that is used to request the charging pile to output a first charging power; or when the direct current socket is successfully connected to the direct current plug, send, to the charging pile, a packet that is used to request the charging pile to output a second charging power, where the second charging power is less than the first charging power.

In this embodiment of this application, when the liquid cooling socket is successfully connected to the liquid cooling plug and the direct current socket is successfully connected to the direct current plug, it indicates that the electric vehicle meets an ultra-fast charging condition. To be specific, when the power battery is charged at a high power, the off-vehicle liquid cooling device may transmit the cooling medium to the thermal management system of the power battery through the liquid cooling plug and the liquid cooling socket. Therefore, the vehicle-mounted charging connection apparatus may send, to the charging pile, the packet that is used to request the charging pile to output the first charging power. The first charging power may be a power higher than a specific threshold. Therefore, when the charging pile charges the power battery at the first charging power, the liquid cooling device injects the cooling medium into the power battery to cool the power battery, to meet a heat dissipation requirement of the power battery during high-power charging. This helps improve the charging power of the power battery and shortens charging duration of the electric vehicle.

When the direct current socket is successfully connected to the direct current plug, it indicates that the electric vehicle does not meet an ultra-fast charging condition. To be specific, if the power battery is charged at a high power, the off-vehicle liquid cooling device cannot transmit the cooling medium to the power battery. Therefore, the vehicle-mounted charging connection apparatus may send, to the charging pile, the packet that is used to request the charging pile to output the second charging power. The second charging power may be a power lower than a specific threshold. Therefore, when the charging pile charges the power battery at the second charging power, because the second charging power is less than a specific threshold, the on-vehicle thermal management system can cool the power battery without using the off-vehicle liquid cooling device to cool the power battery.

On this basis, the foregoing describes the connection confirm circuit, and determining of the status of connection between the direct current socket and the direct current plug and the status of connection between the liquid cooling socket and the liquid cooling plug by using the connection confirm circuit. The following describes a sequence of coupling contacts of the plug and the socket of the liquid cooling connector in a connection process.

In an embodiment, the first vehicle socket includes a plug/unplug end, the plug/unplug end is configured to implement plugging/unplugging with the charging connector, and a distance between the liquid cooling connection confirm socket and the plug/unplug end is greater than or equal to a distance between a liquid inlet/outlet of the liquid cooling socket and the plug/unplug end. The liquid cooling plug includes a plug/unplug end, the plug/unplug end is configured to implement plugging/unplugging with a vehicle socket, and a distance between the liquid cooling connection confirm plug and the plug/unplug end is greater than a distance between a liquid inlet/outlet of the liquid cooling plug and the plug/unplug end.

In this embodiment of this application, the distance between the liquid cooling connection confirm socket and the plug/unplug end is greater than or equal to the distance between the liquid inlet/outlet of the liquid cooling socket and the plug/unplug end. The distance between the liquid cooling connection confirm socket and the plug/unplug end is greater than the distance between the liquid inlet/outlet of the liquid cooling socket and the plug/unplug end. In this case, it is equivalent to that a contact of the liquid inlet/outlet of the liquid cooling socket is first coupled with a contact of the liquid inlet/outlet of the liquid cooling plug, and a contact of the liquid cooling connection confirm socket is then coupled with a contact of the liquid cooling connection confirm plug. In other words, coupling between the contact of the liquid cooling connection confirm socket and the contact of the liquid cooling connection confirm plug is later than coupling between the contact of the liquid inlet/outlet of the liquid cooling socket and the contact of the liquid inlet/outlet of the liquid cooling plug.

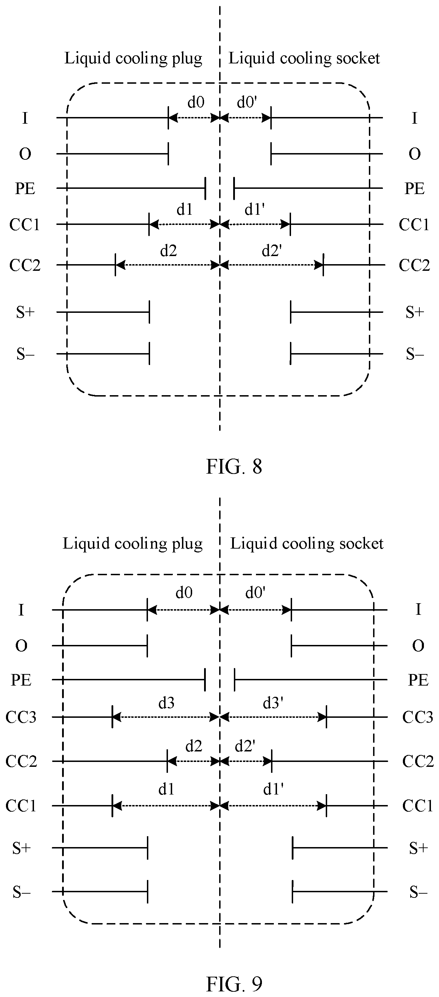

FIG. 8 is a diagram of a liquid injection interface according to an embodiment of this application. The plug/unplug end is a dashed line between the liquid cooling plug and the liquid cooling socket shown in the figure. PE is a ground port, CC1 and CC2 are ports indicating liquid cooling connection confirm, S+ and S- are communication ports, and I and O are a liquid inlet and a liquid outlet respectively.

In this embodiment of this application, there are two distances between the liquid cooling connection confirm plugs and the plug/unplug end, d1 and d2 respectively, and the distance between the liquid inlet/outlet of the liquid cooling plug and the plug/unplug end is d0, where d1>d0, and d2>d0. There are two distances between the liquid cooling connection confirm sockets and the plug/unplug end, d1' and d2' respectively, and the distance between the liquid inlet/outlet of the liquid cooling socket and the plug/unplug end is d0', where d1'>d0', and d2'>d0'. Based on this design, in a process in which the liquid cooling socket is connected to the liquid cooling plug, the liquid inlet/outlet of the liquid cooling socket and the liquid inlet/outlet of the liquid cooling plug are first connected, and the liquid cooling connection confirm sockets and the liquid cooling connection confirm plugs (that is, CC1 and CC2) are then connected. This helps the off-vehicle liquid cooling device cool the power battery when the charging pile charges the electric vehicle at a high power. This is because, if the liquid cooling connection confirm socket and the liquid cooling connection confirm plug are first connected, and the liquid inlet/outlet of the liquid cooling socket and the liquid inlet/outlet of the liquid cooling plug are then connected, it is possible that the port CC1 and the port CC2 are connected, but the liquid inlet/outlet of the liquid cooling socket and the liquid inlet/outlet of the liquid cooling plug are not connected, causing incorrect liquid port connection confirm. In this case, liquid leakage may occur. Therefore, in this embodiment of this application, the distance between the liquid cooling connection confirm socket and the plug/unplug end is designed to be greater than or equal to the distance between the liquid inlet/outlet of the liquid cooling socket and the plug/unplug end, and the distance between the liquid cooling connection confirm plug and the plug/unplug end is designed to be greater than the distance between the liquid inlet/outlet of the liquid cooling plug and the plug/unplug end, to avoid liquid leakage.

In an embodiment, the distance between the first liquid cooling connection confirm socket and the plug/unplug end is greater than or equal to the distance between the second liquid cooling connection confirm socket and the plug/unplug end. The distance between the first liquid cooling connection confirm plug and the plug/unplug end is greater than or equal to the distance between the second liquid cooling connection confirm plug and the plug/unplug end.

In this embodiment of this application, the electric vehicle determines the status of connection between the liquid cooling socket and the liquid cooling plug based on the first liquid cooling connection confirm socket and the first liquid cooling connection confirm plug. The liquid cooling device determines the status of connection between the liquid cooling socket and the liquid cooling plug based on the second liquid cooling connection confirm socket and the second liquid cooling connection confirm plug.

In this embodiment of this application, the distance between the first liquid cooling connection confirm socket and the plug/unplug end is set to be greater than or equal to the distance between the second liquid cooling connection confirm socket and the plug/unplug end, and the distance between the first liquid cooling connection confirm plug and the plug/unplug end is set to be greater than or equal to the distance between the second liquid cooling connection confirm plug and the plug/unplug end. This is equivalent to that the electric vehicle performs final full connection confirm, or the electric vehicle and the liquid cooling device jointly perform final full connection confirm.

The following describes an example in which the electric vehicle performs final full connection confirm. With reference to FIG. 8, the distance between the first liquid cooling connection confirm plug and the plug/unplug end is d2, and the distance between the first liquid cooling connection confirm socket and the plug/unplug end is d2'. The distance between the second liquid cooling connection confirm plug and the plug/unplug end is d1, and the distance between the second connection confirm socket and the plug/unplug end is d1', where d2>d1, and d2'>d1'. Based on this design, in a process in which the liquid cooling socket is connected to the liquid cooling plug, a contact of the second connection confirm socket and a contact of the second connection confirm plug (that is, CC1) are first connected, and a contact of the first connection confirm socket and a contact of the first connection confirm plug (that is, CC2) are then connected. This is equivalent to a case in which the electric vehicle performs final full connection confirm. This helps the vehicle-mounted charging connection apparatus of the electric vehicle determine the status of connection between the liquid cooling socket and the liquid cooling plug, thereby further improving confirm efficiency. This is because the vehicle-mounted charging connection apparatus needs to send, to the charging pile, a packet for requesting a charging power. A value of the charging power is determined by the vehicle-mounted charging connection apparatus. When the liquid cooling socket is connected to the liquid cooling plug, the vehicle-mounted charging connection apparatus may send, to the charging pile, a packet for requesting a relatively high power. When the liquid cooling socket is not connected to the liquid cooling plug, the vehicle-mounted charging connection apparatus may send, to the charging pile, a packet for requesting a relatively low power. If the liquid cooling device performs final full connection confirm, the liquid cooling device further needs to send, to the electric vehicle, a packet indicating that the liquid cooling socket is successfully connected to the liquid cooling plug. In this case, the liquid cooling device can send the packet only after the communication socket is successfully connected to the communication plug, increasing a delay and reducing efficiency. Therefore, in this embodiment of this application, the electric vehicle is designed to perform final full connection confirm, to improve efficiency of determining the status of connection between the liquid cooling socket and the liquid cooling plug.

It should be noted that, in this embodiment of this application, d2=d1 and d2'=d1' may also be designed. Based on this design, in a process in which the liquid cooling socket is connected to the liquid cooling plug, the first connection confirm socket and the first connection confirm plug (that is, CC2), and the second connection confirm socket and the second connection confirm plug (that is, CC1) are connected at the same time. This is equivalent to a case in which the liquid cooling device and the electric vehicle jointly perform final full connection confirm. This design can also improve efficiency of determining the status of connection between the liquid cooling socket and the liquid cooling plug.

In an embodiment, the electric vehicle includes a traction apparatus. The traction apparatus is configured to draw the liquid cooling connector to move, so that the first vehicle socket is fully connected to the liquid cooling connector.

The liquid cooling connection confirm socket further includes a third liquid cooling connection confirm socket. A distance between the second liquid cooling connection confirm socket and the plug/unplug end is equal to a distance between the third liquid cooling connection confirm socket and the plug/unplug end. A distance between the liquid inlet/outlet of the liquid cooling socket and the plug/unplug end is less than the distance between the third liquid cooling connection confirm socket and the plug/unplug end. The distance between the liquid inlet/outlet of the liquid cooling socket and the plug/unplug end is greater than or equal to a distance between the first liquid cooling connection confirm socket and the plug/unplug end.

The liquid cooling connection confirm plug further includes a third liquid cooling connection confirm plug. A distance between the second liquid cooling connection confirm plug and the plug/unplug end is equal to a distance between the third liquid cooling connection confirm plug and the plug/unplug end. A distance between the liquid inlet/outlet of the liquid cooling plug and the plug/unplug end is less than the distance between the third liquid cooling connection confirm plug and the plug/unplug end. The distance between the liquid inlet/outlet of the liquid cooling plug and the plug/unplug end is greater than or equal to a distance between the first liquid cooling connection confirm plug and the plug/unplug end.

In an embodiment of this application, the traction apparatus in the electric vehicle is configured to draw the liquid cooling connector to move, so that the first vehicle socket is fully connected to the liquid cooling connector. In this case, in a process in which a user inserts the liquid cooling connector into the first vehicle socket, the liquid cooling connector and the first vehicle socket are first in a semi-connected state, and then the traction apparatus draws the liquid cooling connector to move, so that the liquid cooling connector and the first vehicle socket are in a fully connected state. In this process, the traction apparatus draws the liquid cooling connector to move, so that the liquid cooling connector and the first vehicle socket are in the fully connected state. The user does not need to manually push the liquid cooling connector, thereby improving user experience.

With reference to FIG. 9, compared with the embodiment shown in FIG. 8, in this embodiment of this application, a third liquid cooling connection confirm socket and a third liquid cooling connection confirm plug are added, and the third liquid cooling connection confirm socket and the third liquid cooling connection confirm plug correspond to a CC3 port in FIG. 9.

The distance between the first liquid cooling connection confirm plug and the plug/unplug end is d2, and the distance between the first liquid cooling connection confirm socket and the plug/unplug end is d2'. The distance between the second liquid cooling connection confirm plug and the plug/unplug end is d1, the distance between the second liquid cooling connection confirm socket and the plug/unplug end is d1', the distance between the third liquid cooling connection confirm plug and the plug/unplug end is d3, and the distance between the third liquid cooling connection confirm socket and the plug/unplug end is d3', where d2≤d0<d1=d3, and d2'≤d0'<d1'=d3'. Based on this design, in a process of connecting the liquid cooling socket to the liquid cooling plug, the contact of the first connection confirm socket and the contact of the first connection confirm plug (that is, CC2) are first connected, and the liquid inlet/outlet of the liquid cooling socket and the liquid inlet/outlet of the liquid cooling plug are then connected; and then, the contact of the second connection confirm socket and the contact of the second connection confirm plug (that is, CC1) are connected, and the contact of the third connection confirm socket and the contact of the third connection confirm plug (that is, CC3) are finally connected. The connection between the first liquid cooling connection confirm socket and the first liquid cooling connection confirm plug may indicate that the liquid cooling connector and the vehicle socket are in a semi-connected state. The connection between the second liquid cooling connection confirm socket and the second liquid cooling connection confirm plug, and the connection between the third liquid cooling connection confirm socket and the third liquid cooling connection confirm plug may indicate that the liquid cooling connector and the vehicle socket are in a fully connected state. Because d1=d3 and d1'=d3', it is equivalent to a case in which the electric vehicle and the liquid cooling device jointly perform final full connection confirm. In other words, occasions of determining the status of connection between the liquid cooling socket and the liquid cooling plug by the electric vehicle and the liquid cooling device are consistent. Therefore, this can ensure that the liquid cooling medium is transmitted to the thermal management system of the power battery in time and can avoid a misjudgment of the liquid cooling device.

In this embodiment of this application, when a contact of the first liquid cooling connection confirm socket is connected to a contact of the first liquid cooling connection confirm plug, it indicates that the liquid cooling socket and the liquid cooling plug are in a semi-connected state. The traction apparatus may draw the liquid cooling connector to move, so that the liquid cooling connector is close to the first vehicle socket. Finally, the liquid cooling connector and the first vehicle socket are in a fully connected state. A user does not need to manually push the liquid cooling connector, thereby improving user experience. If d0<d2 is designed, that is, the contact of the liquid inlet/outlet of the liquid cooling socket and the contact of the liquid inlet/outlet of the liquid cooling plug are first connected, and the contact of the first liquid cooling connection confirm socket and the contact of the first liquid cooling connection confirm plug are then connected, a disadvantage of such a design is that the user needs to first connect the contact of the liquid inlet/outlet of the liquid cooling socket to the contact of the liquid inlet/outlet of the liquid cooling plug, but it is difficult for the user alone to successfully connect the contact of the liquid inlet/outlet of the liquid cooling socket to the contact of the liquid inlet/outlet of the liquid cooling plug, thereby reducing user experience.

In addition, in this embodiment of this application, it is designed that the distance between the second liquid cooling connection confirm socket and the plug/unplug end is equal to the distance between the third liquid cooling connection confirm socket and the plug/unplug end, and the distance between the second liquid cooling connection confirm plug and the plug/unplug end is equal to the distance between the third liquid cooling connection confirm plug and the plug/unplug end. In other words, d1=d3, and d1'=d3'. This is because, if d1>d3 and d1'>d3' are designed, it indicates that the third liquid cooling connection confirm socket and the third liquid cooling connection confirm plug are first connected, and the second liquid cooling connection confirm socket and the second liquid cooling connection confirm plug are then connected. It is possible that the third liquid cooling connection confirm socket is successfully connected to the third liquid cooling connection confirm plug, but the second liquid cooling connection confirm socket is still not connected to the second liquid cooling connection confirm plug. Based on this case, the liquid cooling device determines that the liquid cooling socket is not connected to the liquid cooling plug, and the liquid cooling device does not transmit the cooling medium to the thermal management system of the power battery. Therefore, a heat dissipation problem during charging of the power battery cannot be resolved, affecting high-power charging of the power battery.

If d1<d3 and d1'<d3' are designed, it indicates that the second liquid cooling connection confirm socket and the second liquid cooling connection confirm plug are first connected, and the third liquid cooling connection confirm socket and the third liquid cooling connection confirm plug are then connected. It is possible that the second liquid cooling connection confirm socket is successfully connected to the second liquid cooling connection confirm plug, but the third liquid cooling connection confirm socket is still not connected to the third liquid cooling connection confirm plug. Based on this case, the liquid cooling device determines that the liquid cooling socket is connected to the liquid cooling plug, but actually the electric vehicle determines that the liquid cooling socket is not connected to the liquid cooling plug, causing a misjudgment of the liquid cooling device.

Certainly, in some possible embodiments, a second connection confirm port, that is, the CC1 port, may not be disposed in the liquid cooling connector. When the electric vehicle determines that the liquid cooling socket is successfully connected to the liquid cooling plug, the electric vehicle sends, to the liquid cooling device, the packet indicating that the liquid cooling socket is successfully connected to the liquid cooling plug.

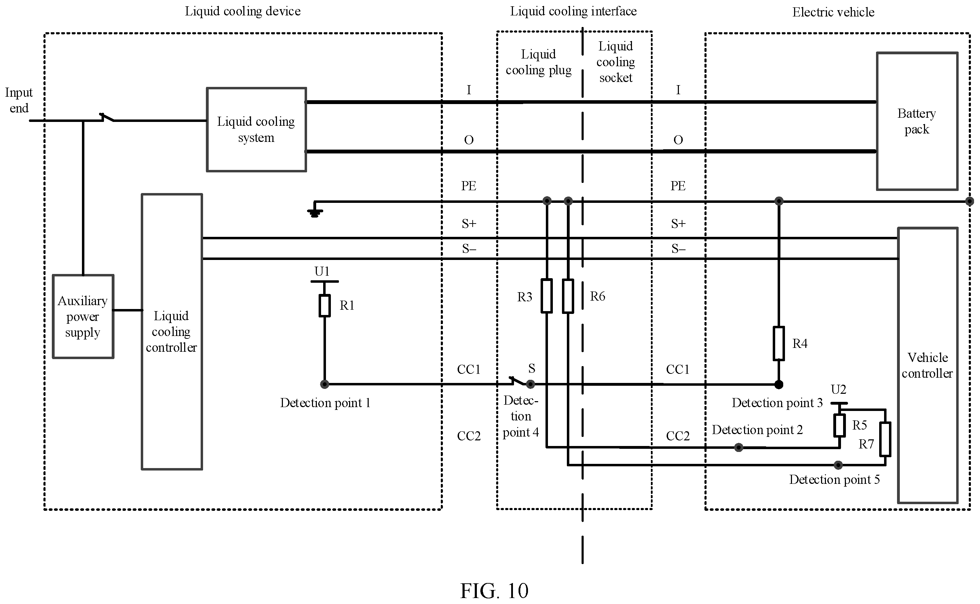

As described above, when the electric vehicle includes the traction apparatus, the contact of the first connection confirm socket and the contact of the first connection confirm plug (that is, CC2) are first connected. It may be considered that the liquid cooling connector and the electric vehicle are in the semi-connected state. For a specific circuit design form, refer to FIG. 10.

With reference to FIG. 10, the first connection confirm socket is connected to the voltage source U2 through R5, and the first connection confirm socket is further connected to the voltage source U2 through R7. The vehicle-mounted charging connection apparatus may determine, based on a detection point 5 between the first connection confirm socket and R7, whether the liquid cooling connector and the electric vehicle are in the semi-connected state. In a process in which the user inserts the liquid cooling connector into the vehicle socket, before the liquid cooling connector and the electric vehicle are not in the semi-connected state, because the detection point 5 is connected to the voltage source U2, a voltage at the detection point 5 should be the voltage output by the voltage source U2. Only when the liquid cooling connector and the electric vehicle are in the semi-connected state, a current of the voltage source U2 flows through the resistor R7 in the electric vehicle, the resistor R6 in the liquid cooling device, and the ground cable in the liquid cooling device to form a loop. Because the detection point 5 is located between the resistor R7 and the resistor R6, the voltage at the detection point 5 can reach the preset value because of the voltage division function of the resistor.

For example, if the voltage output by the voltage source U2 is set to 12 V, and resistance values of R7 and R6 are equal, a third preset value is 6 V. In this design, if the voltage at the detection point 5 is 6 V, it indicates that the liquid cooling socket and the liquid cooling plug are in the semi-connected state.

Based on the foregoing analysis, when the voltage at the detection point 5 is the voltage output by the voltage source U2, it indicates that the liquid cooling socket is not connected to the liquid cooling plug. When the voltage at the detection point 5 is the third preset value, it indicates that the liquid cooling socket and the liquid cooling plug are in the semi-connected state.

In an embodiment, in response to the liquid cooling socket being successfully connected to the liquid cooling plug, the vehicle-mounted charging connection apparatus is configured to send a packet indicating that the liquid cooling socket is successfully connected to the liquid cooling plug. Correspondingly, the liquid cooling device is configured to receive the packet indicating that the liquid cooling socket is successfully connected to the liquid cooling plug.

In this embodiment of this application, when the vehicle-mounted charging connection apparatus determines that the liquid cooling socket is successfully connected to the liquid cooling plug, the vehicle-mounted charging connection apparatus may send the packet to the liquid cooling device. The packet indicates that the liquid cooling socket is successfully connected to the liquid cooling plug. After receiving the packet, the liquid cooling device does not need to determine the status of connection between the liquid cooling plug and the liquid cooling socket based on the voltage at the detection point in the connection confirm circuit, thereby improving determining efficiency.

In addition, this application further provides an electric vehicle. The electric vehicle includes a vehicle-mounted charging connection apparatus, a power battery, and a thermal management system. The thermal management system is used to dissipate heat for the power battery. The vehicle-mounted charging connection apparatus includes a first vehicle socket and a liquid cooling connection confirm circuit. The first vehicle socket includes a liquid cooling socket and a liquid cooling connection confirm socket. One end of the liquid cooling socket is configured to connect to a liquid cooling plug of a liquid cooling connector, and the other end of the liquid cooling socket is connected to a thermal management system through a liquid cooling pipeline. The liquid cooling socket is configured to receive a coolant output by the liquid cooling plug, or the liquid cooling socket is configured to output a coolant to the liquid cooling plug. One end of the liquid cooling connection confirm socket is configured to connect to a liquid cooling connection confirm plug of the liquid cooling connector, and the other end of the liquid cooling connection confirm socket is connected to the liquid cooling connection confirm circuit.

The electric vehicle is configured to determine a status of connection between the liquid cooling socket and the liquid cooling plug by using the liquid cooling connection confirm circuit. For a specific manner in which the vehicle-mounted charging connection apparatus in the electric vehicle determines the status of connection between the liquid cooling socket and the liquid cooling plug by using the liquid cooling connection confirm circuit, and determines a status of connection between a direct current socket and a direct current plug by using a charging connection confirm circuit, refer to the foregoing related content. Details are not described again.

This application further provides a charging pile. The charging pile includes a liquid cooling device, a power module, and a charging connector. The charging connector is connected to the power module. The charging connector is configured to charge an electric vehicle. The liquid cooling device includes a liquid cooling connector plug, a liquid cooling connection confirm circuit, and a liquid cooling system. The liquid cooling connector plug includes a liquid cooling plug and a liquid cooling connection confirm plug. One end of the liquid cooling plug is configured to connect to a liquid cooling socket of the electric vehicle, and the other end of the liquid cooling plug is connected to the liquid cooling system. One end of the liquid cooling connection confirm plug is configured to connect to a liquid cooling connection confirm socket of the electric vehicle, and the other end of the liquid cooling connection confirm plug is connected to the liquid cooling connection confirm circuit.

The charging pile is configured to determine a status of connection between the liquid cooling plug and the liquid cooling socket by using the liquid cooling connection confirm circuit.

For a specific manner in which the charging pile determines the status of connection between the liquid cooling plug and the liquid cooling socket by using the liquid cooling connection confirm circuit, refer to the foregoing related content about specific identification of the liquid cooling device. Details are not described again.

As described above, the liquid cooling device determines the status of connection between the liquid cooling socket and the liquid cooling plug based on a voltage at a detection point in the connection confirm circuit. In some embodiments, the liquid cooling device may also identify the status of connection between the liquid cooling socket and the liquid cooling plug in another manner. For details, refer to the following.

An embodiment of this application provides a vehicle-mounted charging connection apparatus. The vehicle-mounted charging connection apparatus is used in an electric vehicle. The vehicle-mounted charging connection apparatus includes a first vehicle socket and a liquid cooling connection confirm circuit. The first vehicle socket includes a liquid cooling socket and a liquid cooling connection confirm socket. The first vehicle socket is configured to connect to a liquid cooling connector of a liquid cooling device.

One end of the liquid cooling socket is configured to connect to a liquid cooling plug of the liquid cooling connector, and the other end of the liquid cooling socket is connected to a thermal management system of a power battery through a liquid cooling pipeline. The liquid cooling socket is configured to receive a coolant output by the liquid cooling plug, or the liquid cooling socket is configured to output a coolant to the liquid cooling plug.

One end of the liquid cooling connection confirm socket is configured to connect to a liquid cooling connection confirm plug of the liquid cooling connector, and the other end of the liquid cooling connection confirm socket is connected to the liquid cooling connection confirm circuit.

The vehicle-mounted charging connection apparatus is configured to determine a status of connection between the liquid cooling socket and the liquid cooling plug by using the liquid cooling connection confirm circuit; and in response to the liquid cooling socket being successfully connected to the liquid cooling plug, send, to the liquid cooling device, a packet indicating that the liquid cooling socket is successfully connected to the liquid cooling plug.

Correspondingly, for the liquid cooling device, the liquid cooling device includes a liquid cooling connector plug, a liquid cooling connection confirm circuit, and a liquid cooling system. The liquid cooling connector plug includes a liquid cooling plug and a liquid cooling connection confirm plug. One end of the liquid cooling plug is configured to connect to a liquid cooling socket of the electric vehicle, and the other end of the liquid cooling plug is connected to the liquid cooling system through a pipeline.

One end of the liquid cooling connection confirm plug is configured to connect to a liquid cooling connection confirm socket of the electric vehicle, and the other end of the liquid cooling connection confirm plug is connected to the liquid cooling connection confirm circuit.

The liquid cooling device is configured to receive the packet that indicates that the liquid cooling socket is successfully connected to the liquid cooling plug and that is sent by the electric vehicle. In response to the liquid cooling socket being successfully connected to the liquid cooling plug, the liquid cooling system is configured to output the coolant to the electric vehicle by using the liquid cooling plug.

The liquid cooling socket in this embodiment of this application further includes the liquid cooling connection confirm socket in addition to a liquid inlet/outlet. Because the liquid cooling connection confirm socket is connected to the liquid cooling connection confirm circuit, the vehicle-mounted charging connection apparatus may determine the status of connection between the liquid cooling socket and the liquid cooling plug by using the liquid cooling connection confirm circuit. In addition, when the liquid cooling socket is successfully connected to the liquid cooling plug, and a charging apparatus charges the power battery at a high power, the coolant is received from the liquid cooling device by using the liquid cooling socket, and the coolant is transmitted to the thermal management system of the power battery to cool the power battery, to resolve a heat dissipation problem during charging of the power battery, thereby increasing a charging power provided by the charging apparatus for the power battery. In addition, when determining that the liquid cooling socket is successfully connected to the liquid cooling plug, the vehicle-mounted charging connection apparatus may send the packet to the liquid cooling device. The packet indicates that the liquid cooling socket is successfully connected to the liquid cooling plug. In this way, the liquid cooling device does not need to determine the status of connection between the liquid cooling socket and the liquid cooling plug, to save a time for determining the status of connection between the socket and the plug, thereby improving efficiency.

In an embodiment, when the liquid cooling socket is connected to the liquid cooling plug, the liquid cooling connection confirm circuit connected to the liquid cooling connection confirm socket and a liquid cooling connection confirm circuit connected to the liquid cooling connection confirm plug form a current loop. The vehicle-mounted charging connection apparatus is configured to detect a voltage at a detection point in the current loop to determine the status of connection between the liquid cooling socket and the liquid cooling plug.

In response to the voltage at the detection point in the liquid cooling connection confirm circuit reaching a vehicle-end preset value, the vehicle-mounted charging connection apparatus is configured to determine that the liquid cooling socket is successfully connected to the liquid cooling plug.

In this embodiment of this application, when the liquid cooling socket is connected to the liquid cooling plug, the liquid cooling connection confirm circuit and a liquid cooling connection confirm circuit of a charging pile form the current loop by using the liquid cooling connection confirm socket and the liquid cooling connection confirm plug. A detection point may be set in the current loop. When a voltage at the detection point in the current loop reaches the vehicle-end preset value, the vehicle-mounted charging connection apparatus determines that the liquid cooling socket is successfully connected to the liquid cooling plug.

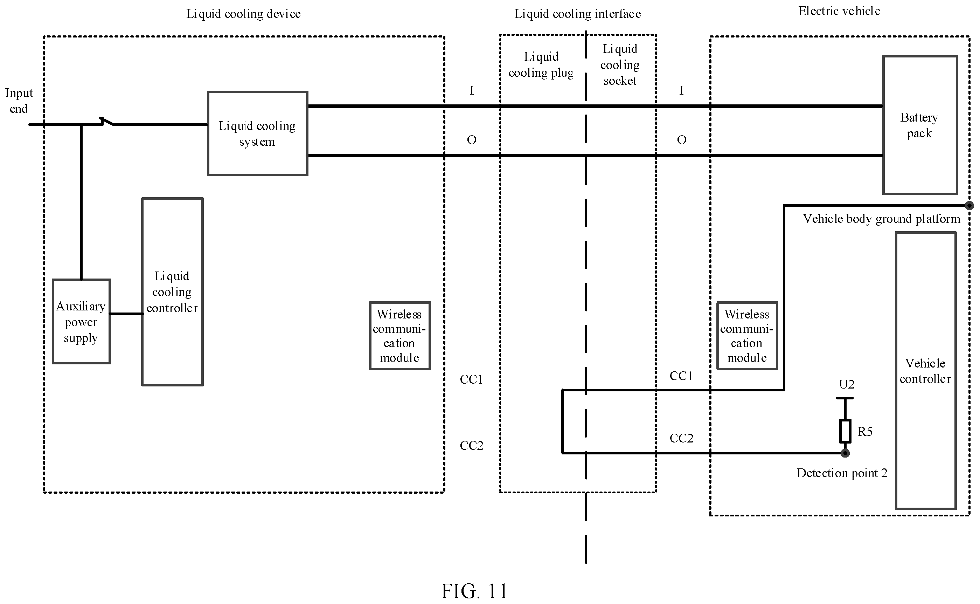

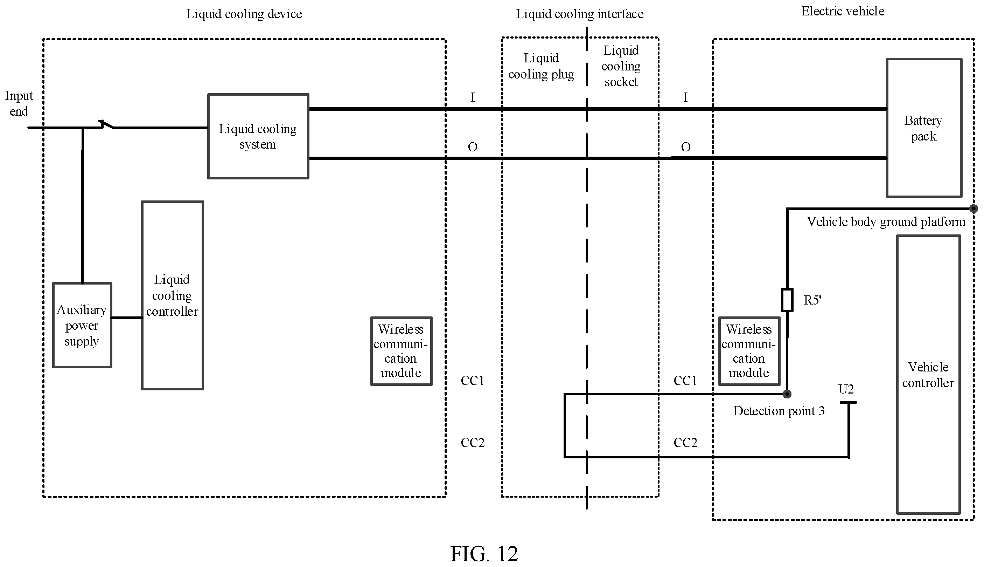

The vehicle-end preset value in this embodiment of this application is related to a specific circuit form of the liquid cooling connection confirm circuit and a location of the detection point. For details, refer to the following content about FIG. 11 and FIG. 12.

In an embodiment, the vehicle socket further includes a ground socket. One end of the ground socket is configured to connect to a ground plug of a liquid cooling connector, and the other end of the ground socket is connected to a vehicle body ground platform. The liquid cooling connection confirm plug includes a first liquid cooling connection confirm plug and a second liquid cooling connection confirm plug. The liquid cooling connection confirm circuit includes a conducting wire. The first liquid cooling connection confirm plug is connected to the second liquid cooling connection confirm plug through the conducting wire. The liquid cooling connection confirm socket includes a first liquid cooling connection confirm socket and a second liquid cooling connection confirm socket. The liquid cooling connection confirm circuit includes a first resistor unit. The first liquid cooling connection confirm socket is connected to a voltage source through the first resistor unit, and the second liquid cooling connection confirm circuit is connected to the vehicle body ground platform.

In an embodiment, in response to a voltage at a detection point between the first resistor unit and the first liquid cooling connection confirm socket reaching the vehicle-end preset value, the vehicle-mounted charging connection apparatus is configured to determine that the liquid cooling socket is successfully connected to the liquid cooling plug.

FIG. 11 is a diagram of a heat dissipation system according to an embodiment of this application. The first resistor unit includes a resistor R5. The first liquid cooling connection confirm socket is a socket corresponding to a CC2 port. The voltage source is U2. The detection point between the first resistor unit and the first liquid cooling connection confirm socket is a detection point 2.

Before the liquid cooling socket is connected to the liquid cooling plug, because the detection point 2 is connected to the voltage source U2, a voltage at the detection point 2 is a voltage output by the voltage source U2. Only when the liquid cooling socket is connected to the liquid cooling plug, the voltage source U2, the resistor R5 in the electric vehicle, a cable in the liquid cooling device, and the ground cable in the electric vehicle form a loop, and the voltage at the detection point 2 reaches the vehicle-end preset value. In addition, because the detection point 2 is connected to the ground cable, the voltage at the detection point 2 should be 0 V.

Therefore, based on the foregoing analysis, when the voltage at the detection point 2 is the voltage output by the voltage source U2, the vehicle-mounted charging connection apparatus can identify that the liquid cooling socket is not connected to the liquid cooling plug. When the voltage at the detection point 2 reaches the vehicle-end preset value, the vehicle-mounted charging connection apparatus can identify that the liquid cooling socket is successfully connected to the liquid cooling plug.

In an embodiment, the vehicle socket further includes a ground socket. One end of the ground socket is configured to connect to a ground plug of a liquid cooling connector, and the other end of the ground socket is connected to a vehicle body ground platform. The liquid cooling connection confirm plug includes a first liquid cooling connection confirm plug and a second liquid cooling connection confirm plug. The liquid cooling connection confirm circuit includes a conducting wire. The first liquid cooling connection confirm plug is connected to the second liquid cooling connection confirm plug through the conducting wire.

The liquid cooling connection confirm socket includes a first liquid cooling connection confirm socket and a second liquid cooling connection confirm socket. The liquid cooling connection confirm circuit includes a second resistor unit.

The first liquid cooling connection confirm socket is connected to a voltage source, and the second liquid cooling connection confirm socket is connected to the vehicle body ground platform through the second resistor unit.

In an embodiment, in response to a voltage at a detection point between the second resistor unit and the second liquid cooling connection confirm socket reaching the vehicle-end preset value, the vehicle-mounted charging connection apparatus is configured to determine that the liquid cooling socket is successfully connected to the liquid cooling plug.

FIG. 12 is a diagram of a heat dissipation system according to an embodiment of this application. The second resistor unit includes a resistor R5'. The second liquid cooling connection confirm socket is a socket corresponding to a CC1 port. The voltage source is U2. The detection point between the second resistor unit and the second liquid cooling connection confirm socket is a detection point 3.

Before the liquid cooling socket is connected to the liquid cooling plug, because the detection point 3 is connected to the vehicle body ground platform, a voltage at the detection point 3 is 0 V. Only when the liquid cooling socket is connected to the liquid cooling plug, the voltage source U2, a cable in the liquid cooling device, the resistor R5' in the electric vehicle, and the ground cable in the electric vehicle form a loop, and the voltage at the detection point 3 reaches the vehicle-end preset value. In addition, because the detection point 3 is connected to the voltage source U2, the voltage at the detection point 3 should be the voltage output by the voltage source U2.

Therefore, based on the foregoing analysis, when the voltage at the detection point 3 is 0 V, the vehicle-mounted charging connection apparatus can identify that the liquid cooling socket is not connected to the liquid cooling plug. When the voltage at the detection point 3 reaches the vehicle-end preset value, the vehicle-mounted charging connection apparatus can identify that the liquid cooling socket is successfully connected to the liquid cooling plug.

In an embodiment, the vehicle-mounted charging connection apparatus and the liquid cooling device each include a wireless communication module. The vehicle-mounted charging connection apparatus is configured to send a packet to the charging pile by using the wireless communication module. Correspondingly, the liquid cooling device further includes a wireless communication module, and the liquid cooling device is configured to receive and send packets by using the wireless communication module.

The wireless communication module in this embodiment of this application may include Bluetooth, Wi-Fi, nearlink, and the like.

In an embodiment, the electric vehicle includes a traction apparatus. The traction apparatus is configured to draw the liquid cooling connector to move, so that the first vehicle socket is fully connected to the liquid cooling connector.

The liquid cooling connection confirm socket further includes a third liquid cooling connection confirm socket. A distance between the second liquid cooling connection confirm socket and the plug/unplug end is equal to a distance between the third liquid cooling connection confirm socket and the plug/unplug end. A distance between the liquid inlet/outlet of the liquid cooling socket and the plug/unplug end is less than the distance between the third liquid cooling connection confirm socket and the plug/unplug end. The distance between the liquid inlet/outlet of the liquid cooling socket and the plug/unplug end is greater than or equal to a distance between the first liquid cooling connection confirm socket and the plug/unplug end.

In an embodiment, the vehicle-mounted charging connection apparatus further includes a charging connection confirm circuit and a second vehicle socket. The second vehicle socket includes a direct current socket and a charging connection confirm socket. One end of the direct current socket is configured to connect to a direct current plug of the charging connector, and the other end of the direct current socket is connected to the power battery. One end of the charging connection confirm socket is configured to connect to a connection confirm plug of the charging connector, and the other end of the charging connection confirm socket is connected to the charging connection confirm circuit. The vehicle-mounted charging connection apparatus is configured to determine a status of connection between the direct current socket and the direct current plug by using the charging connection confirm circuit.

In an embodiment, the second vehicle socket further includes an auxiliary power socket. One end of the auxiliary power socket is configured to connect to an auxiliary power plug of the charging connector, and the other end of the auxiliary power socket is configured to receive a direct current. The second vehicle socket further includes a second communication socket. One end of the second communication socket is configured to connect to a communication plug of the charging connector, and the other end of the second communication socket is connected to a controller.

In an embodiment, the vehicle-mounted charging connection apparatus is configured to: when the liquid cooling socket is successfully connected to the liquid cooling plug and the direct current socket is successfully connected to the direct current plug, send, to the charging pile, a packet that is used to request the charging pile to output a first charging power; or when the direct current socket is successfully connected to the direct current plug, send, to the charging pile, a packet that is used to request the charging pile to output a second charging power, where the second charging power is less than the first charging power.

For details about this part of content, refer to related content in the foregoing embodiment. Details are not described again.

In the foregoing embodiment, the electric vehicle determines the status of connection between the liquid cooling socket and the liquid cooling plug by using the connection confirm circuit, and when the liquid cooling socket is successfully connected to the liquid cooling plug, sends, to the liquid cooling device, a packet used to notify the liquid cooling device that the liquid cooling socket is successfully connected to the liquid cooling plug. In another possible embodiment, the packet may alternatively be sent by the liquid cooling device to the vehicle-mounted charging connection apparatus. The liquid cooling device may determine the status of connection between the liquid cooling socket and the liquid cooling plug by using the connection confirm circuit, and when the liquid cooling socket is successfully connected to the liquid cooling plug, send, to a vehicle-mounted charging pile apparatus, a packet that is used to notify the vehicle-mounted charging connection apparatus that the liquid cooling socket is successfully connected to the liquid cooling plug.

In addition, this application further provides an electric vehicle. The electric vehicle includes a vehicle-mounted charging connection apparatus, a power battery, and a thermal management system. The thermal management system is used to dissipate heat for the power battery. The vehicle-mounted charging connection apparatus is used in an electric vehicle. The vehicle-mounted charging connection apparatus includes a first vehicle socket and a liquid cooling connection confirm circuit. The first vehicle socket includes a liquid cooling socket and a liquid cooling connection confirm socket. The first vehicle socket is configured to connect to a liquid cooling connector of a liquid cooling device. One end of the liquid cooling socket is configured to connect to a liquid cooling plug of the liquid cooling connector, and the other end of the liquid cooling socket is connected to a thermal management system of the power battery through a liquid cooling pipeline. The liquid cooling socket is configured to receive a coolant output by the liquid cooling plug, or the liquid cooling socket is configured to output a coolant to the liquid cooling plug. One end of the liquid cooling connection confirm socket is configured to connect to a liquid cooling connection confirm plug of the liquid cooling connector, and the other end of the liquid cooling connection confirm socket is connected to the liquid cooling connection confirm circuit. The electric vehicle is configured to determine a status of connection between the liquid cooling socket and the liquid cooling plug by using the liquid cooling connection confirm circuit; and in response to the liquid cooling socket being successfully connected to the liquid cooling plug, send, to the liquid cooling device, a packet indicating that the liquid cooling socket is successfully connected to the liquid cooling plug.

The electric vehicle is configured to determine a status of connection between the liquid cooling socket and the liquid cooling plug by using the liquid cooling connection confirm circuit. For a specific manner in which the vehicle-mounted charging connection apparatus in the electric vehicle determines the status of connection between the liquid cooling socket and the liquid cooling plug by using the liquid cooling connection confirm circuit, and determines a status of connection between a direct current socket and a direct current plug by using a charging connection confirm circuit, refer to the foregoing related content. Details are not described again.

This application further provides a charging pile. The charging pile includes a liquid cooling device, a power module, and a charging connector. The charging connector is connected to the power module. The charging connector is configured to charge an electric vehicle. The liquid cooling device includes a liquid cooling connector plug, a liquid cooling connection confirm circuit, and a liquid cooling system. The liquid cooling connector plug includes a liquid cooling plug and a liquid cooling connection confirm plug. One end of the liquid cooling plug is configured to connect to a liquid cooling socket of the electric vehicle, and the other end of the liquid cooling plug is connected to the liquid cooling system through a pipeline. One end of the liquid cooling connection confirm plug is configured to connect to a liquid cooling connection confirm socket of the electric vehicle, and the other end of the liquid cooling connection confirm plug is connected to the liquid cooling connection confirm circuit. The liquid cooling device is configured to receive a packet that indicates that the liquid cooling socket is successfully connected to the liquid cooling plug and that is sent by the electric vehicle. In response to the liquid cooling socket being successfully connected to the liquid cooling plug, the liquid cooling system is configured to output a coolant to the electric vehicle by using the liquid cooling plug.

For content related to the liquid cooling device in the charging pile, refer to the foregoing specific related content about the liquid cooling device. Details are not described again.

In addition, this application further provides a control guiding circuit used in an electric vehicle and a liquid cooling device. The control guiding circuit includes a connection confirm circuit. The electric vehicle includes a liquid cooling socket and a liquid cooling connection confirm socket. The liquid cooling device includes a liquid cooling plug and a liquid cooling connection confirm plug.

One end of the liquid cooling socket is configured to connect to one end of the liquid cooling plug, the other end of the liquid cooling socket is configured to connect to a thermal management system of a power battery of the electric vehicle, and the other end of the liquid cooling plug is configured to receive or output a coolant.

The connection confirm circuit includes a vehicle-end connection confirm circuit located in the electric vehicle and a pile-end connection confirm circuit located in the liquid cooling device. The vehicle-end connection confirm circuit is connected to the liquid cooling socket. The pile-end connection confirm circuit is connected to the liquid cooling plug.

When the liquid cooling plug is connected to the liquid cooling socket, the vehicle-end connection confirm circuit and the pile-end connection confirm circuit form a loop, and a voltage at a detection point in the loop indicates a status of connection between the liquid cooling plug and the liquid cooling socket.

The control guiding circuit in this embodiment of this application may be used in the electric vehicle and the liquid cooling device. In other words, a part of the connection confirm circuit (that is, the vehicle-end connection confirm circuit) in the control guiding circuit is located in the electric vehicle, and the other part of the connection confirm circuit (that is, the pile-end connection confirm circuit) is located in the liquid cooling device. When the liquid cooling plug is not connected to the liquid cooling socket, the vehicle-end connection confirm circuit located in the electric vehicle is a separate circuit, and the pile-end connection confirm circuit located in the liquid cooling device is a separate circuit. Only when the liquid cooling plug is connected to the liquid cooling socket, the vehicle-end connection confirm circuit located in the electric vehicle and the pile-end connection confirm circuit located in the liquid cooling device can form a loop.

In the conventional technologies, a connection port of an off-vehicle cooling system is merely a single liquid inlet/outlet. When a charging pile charges a power battery of an electric vehicle, the electric vehicle and the off-vehicle cooling system cannot identify whether the electric vehicle and the off-vehicle cooling system are connected to each other, which affects normal high-power charging performed on the power battery by the charging pile. In this embodiment of this application, a voltage at a detection point in the control guiding circuit may indicate the status of connection between the liquid cooling plug and the liquid cooling socket. Therefore, when the voltage at the detection point indicates that the liquid cooling socket is successfully connected to the liquid cooling plug, and the charging pile charges the power battery at a high power, the liquid cooling device injects a cooling medium into the power battery to cool the power battery, to resolve a heat dissipation problem during charging of the power battery, thereby increasing a charging power provided by the charging apparatus for the power battery.

The following describes a specific circuit form of the control guiding circuit.

In an embodiment, the liquid cooling device further includes a ground plug, and the electric vehicle further includes a ground socket. One end of the ground plug is configured to connect to one end of the ground socket, the other end of the ground plug is configured to connect to a device ground platform, and the other end of the ground socket is configured to connect to a vehicle body ground platform. The liquid cooling connection confirm socket includes a first liquid cooling connection confirm socket and a second liquid cooling connection confirm socket. The liquid cooling connection confirm plug includes a first liquid cooling connection confirm plug and a second liquid cooling connection confirm plug.

The vehicle-end connection confirm circuit includes a first vehicle-end connection confirm circuit. The first vehicle-end connection confirm circuit includes a first resistor and a first voltage source. The first liquid cooling connection confirm socket is connected to the first voltage source through the first resistor.

The pile-end connection confirm circuit includes a first pile-end connection confirm circuit. The first pile-end connection confirm circuit includes a second resistor. The first liquid cooling connection confirm plug is connected to the device ground platform through the second resistor.

The detection point is located between the first liquid cooling connection confirm socket and the first resistor.

In an embodiment, a voltage at a detection point between the first liquid cooling connection confirm socket and the first resistor reaches a first preset value, to indicate that the liquid cooling plug is successfully connected to the liquid cooling socket.

With reference to FIG. 4, in this embodiment of this application, the first resistor and the second resistor respectively include the resistor R5 and the resistor R3, the first voltage source is U2, and a detection point between the first resistor and the first liquid cooling connection confirm socket is the detection point 2.

Before the liquid cooling socket is connected to the liquid cooling plug, because the detection point 2 is connected to the first voltage source U2, a voltage at the detection point 2 is a voltage output by the first voltage source U2. Only when the liquid cooling socket is connected to the liquid cooling plug, the first voltage source U2, the resistor R5 in the electric vehicle, the resistor R3 in the liquid cooling device, and a ground cable in the liquid cooling device form a loop. Because of a voltage division function of the resistor, the voltage at the detection point 2 reaches the first preset value.

For example, if the voltage output by the first voltage source U2 is set to 12 V, and resistance values of R3 and R5 are equal, a first preset value is 6 V. In this design, if the voltage at the detection point 2 is 6 V, it indicates that the liquid cooling socket and the liquid cooling plug are in the connected state.

For another example, the voltage output by the first voltage source U2 is still set to 12 V, but resistance values of R3 and R5 are not equal. For example, if R3 is 2 Ω, and R5 is 4 Ω, the first preset value is 4 V. In this design, if the voltage at the detection point 2 is 4 V, it indicates that the liquid cooling socket and the liquid cooling plug are in the connected state.

Therefore, based on the foregoing analysis, when the voltage at the detection point 2 is the voltage output by the first voltage source U2, it indicates that the liquid cooling socket is not connected to the liquid cooling plug. When the voltage at the detection point 2 reaches the first preset value, it indicates that the liquid cooling socket is successfully connected to the liquid cooling plug.

In this embodiment of this application, because the detection point set in this application is connected to the first voltage source in the electric vehicle, when the voltage at the detection point is the voltage output by the first voltage source, it indicates that the liquid cooling socket is not connected to the liquid cooling plug. When the voltage at the detection point reaches the first preset value, it indicates that it is identified that the liquid cooling socket is connected to the liquid cooling plug. The voltage at the detection point may indicate the status of connection between the liquid cooling socket and the liquid cooling plug. In addition, when the voltage at the detection point indicates that the liquid cooling socket is successfully connected to the liquid cooling plug, and the charging pile charges the power battery at a high power, the liquid cooling device injects the cooling medium into the power battery to cool the power battery, to meet a heat dissipation requirement of the power battery during high-power charging. This helps improve the charging power of the power battery and shortens charging duration of the electric vehicle.

In an embodiment, the vehicle-end connection confirm circuit further includes a second vehicle-end connection confirm circuit. The second vehicle-end connection confirm circuit includes a third resistor. The second liquid cooling connection confirm socket is connected to the vehicle body ground platform through the third resistor.

The pile-end connection confirm circuit further includes a second pile-end connection confirm circuit. The second pile-end connection confirm circuit includes a fourth resistor and a second voltage source. The second liquid cooling connection confirm plug is connected to the second voltage source through the fourth resistor.

The detection point is located between the second liquid cooling connection confirm plug and the fourth resistor.

In an embodiment, the voltage at the detection point between the first liquid cooling connection confirm socket and the first resistor reaches the first preset value, and a voltage at a detection point between the second liquid cooling connection confirm plug and the fourth resistor reaches a second preset value, to indicate that the liquid cooling plug is successfully connected to the liquid cooling socket.

With reference to FIG. 4, the third resistor and the fourth resistor in this embodiment of this application respectively include R4 and R1. The second voltage source in the liquid cooling device is U1. The detection point between the second liquid cooling connection confirm plug and the fourth resistor is the detection point 1.

Before the liquid cooling socket is connected to the liquid cooling plug, because the detection point 1 is connected to the second voltage source U1 and the detection point 2 is connected to the first voltage source U2, the voltage at the detection point 1 is the voltage output by the second voltage source U1, and the voltage at the detection point 2 is the voltage output by the first voltage source U2. Only when the liquid cooling socket is connected to the liquid cooling plug, the second voltage source U1 in the liquid cooling device, the resistor R1, and the resistor R4 in the electric vehicle form a loop, and the first voltage source U2, R5, R3, and the ground cable in the liquid cooling device form a loop. Because of a voltage division function of the resistor, the voltage at the detection point 1 reaches the second preset value, and the voltage at the detection point 2 reaches the first preset value.

For example, if the voltages output by the first voltage source U2 and the second voltage source U1 are set to 12 V, resistance values of R1 and R4 are equal, and resistance values of R5 and R3 are equal, the first preset value and the second preset value are 6 V. In this design, if the voltages at the detection point 1 and the detection point 2 are 6 V, it indicates that the liquid cooling socket and the liquid cooling plug are in the connected state.

Therefore, based on the foregoing analysis, when the voltage at the detection point 2 is the voltage output by the first voltage source U2 and the voltage at the detection point 1 is the voltage output by the second voltage source U1, it indicates that the liquid cooling socket is not connected to the liquid cooling plug. When the voltage at the detection point 2 reaches the first preset value and the voltage at the detection point 1 reaches the second preset value, it indicates that the liquid cooling socket is successfully connected to the liquid cooling plug.

In some embodiments, the status of connection between the liquid cooling socket and the liquid cooling plug may alternatively be determined based on the voltage at the detection point 1.

In this embodiment of this application, because the detection point set in this application is connected to the voltage source, when the voltage at the detection point is the voltage output by the voltage source, it indicates that the liquid cooling socket is not connected to the liquid cooling plug. When the voltages at the two detection points respectively reach the first preset value and the second preset value, it indicates that it is identified that the liquid cooling socket is connected to the liquid cooling plug. The voltage at the detection point may indicate the status of connection between the liquid cooling socket and the liquid cooling plug. In addition, when the voltage at the detection point indicates that the liquid cooling socket is successfully connected to the liquid cooling plug, and the charging pile charges the power battery at a high power, the liquid cooling device injects the cooling medium into the power battery to cool the power battery, to meet a heat dissipation requirement of the power battery during high-power charging. This helps improve the charging power of the power battery and shortens charging duration of the electric vehicle.

In an embodiment, the second pile-end connection confirm circuit further includes a normally closed switch, and the normally closed switch is located between the fourth resistor and the second liquid cooling connection confirm plug.

In an embodiment, the detection point includes two detection points. One detection point is located between the fourth resistor and the normally closed switch, and the other detection point is located between the second liquid cooling connection confirm plug and the normally closed switch.

In an embodiment, the voltage at the detection point between the fourth resistor and the normally closed switch and the voltage at the detection point between the second liquid cooling connection confirm plug and the normally closed switch both reach the second preset value, to indicate that the liquid cooling plug is successfully connected to the liquid cooling socket.

With reference to FIG. 5, the two detection points in this embodiment of this application are respectively a detection point 1 and a detection point 4. For a specific determining process, refer to the foregoing content about FIG. 5. Details are not described again.

In an embodiment, the electric vehicle further includes a ground socket. One end of the ground socket is configured to connect to a ground plug of a liquid cooling connector, and the other end of the ground socket is connected to a vehicle body ground platform. The liquid cooling connection confirm socket includes a first liquid cooling connection confirm socket and a second liquid cooling connection confirm socket. The liquid cooling connection confirm plug includes a first liquid cooling connection confirm plug and a second liquid cooling connection confirm plug.

The vehicle-end connection confirm circuit includes a third vehicle-end connection confirm circuit and a fourth vehicle-end connection confirm circuit. The third vehicle-end connection confirm circuit includes a fifth resistor and a third voltage source. The first liquid cooling connection confirm socket is connected to the first voltage source through the first resistor. The second liquid cooling connection confirm socket is connected to the vehicle body ground platform.

The pile-end connection confirm circuit includes a conducting wire. The first liquid cooling connection confirm plug is connected to the second liquid cooling connection confirm plug through the conducting wire.

The detection point is located between the first liquid cooling connection confirm socket and the fifth resistor.

In an embodiment, a voltage at a detection point between the first liquid cooling connection confirm socket and the fifth resistor reaches a third preset value, to indicate that the liquid cooling plug is successfully connected to the liquid cooling socket.

In this embodiment of this application, the fifth resistor is R5, the third voltage source is U2, and the detection point between the fifth resistor and the first liquid cooling connection confirm socket is the detection point 2 in FIG. 11. For a specific process, refer to the related content in FIG. 11. Details are not described again.

In an embodiment, the electric vehicle further includes a ground socket. One end of the ground socket is configured to connect to a ground plug of a liquid cooling connector, and the other end of the ground socket is connected to a vehicle body ground platform. The liquid cooling connection confirm socket includes a first liquid cooling connection confirm socket and a second liquid cooling connection confirm socket. The liquid cooling connection confirm plug includes a first liquid cooling connection confirm plug and a second liquid cooling connection confirm plug.

The vehicle-end connection confirm circuit includes a fifth vehicle-end connection confirm circuit and a sixth vehicle-end connection confirm circuit. The fifth vehicle-end connection confirm circuit includes a fourth voltage source. The sixth vehicle-end connection confirm circuit includes a sixth resistor. The first liquid cooling connection confirm socket is connected to the fourth voltage source. The second liquid cooling connection confirm socket is connected to the vehicle body ground platform through the sixth resistor.

The pile-end connection confirm circuit includes a conducting wire. The first liquid cooling connection confirm plug is connected to the second liquid cooling connection confirm plug through the conducting wire.

The detection point is located between the second liquid cooling connection confirm socket and the sixth resistor.

In an embodiment, a voltage at the detection point between the second liquid cooling connection confirm socket and the sixth resistor reaches a fourth preset value, to indicate that the liquid cooling plug is successfully connected to the liquid cooling socket.

In this embodiment of this application, the sixth resistor is R5', the fourth voltage source is U2, and the detection point between the sixth resistor and the second liquid cooling connection confirm socket is the detection point 3 in FIG. 12. For a specific process, refer to the related content in FIG. 12. Details are not described again.

In an embodiment, the control guiding circuit further includes a communication circuit, the liquid cooling device further includes a communication plug, and the vehicle socket further includes a communication socket. The communication circuit includes a first communication circuit located in the liquid cooling device and a second communication circuit located in the electric vehicle. One end of the first communication circuit is connected to a controller of the liquid cooling device, and the other end of the first communication circuit is connected to the communication plug. One end of the second communication circuit is connected to a controller of the electric vehicle, and the other end of the second communication circuit is connected to the communication socket.

The communication socket and the communication plug in this embodiment of this application are the socket and the plug corresponding to S+ and S- in FIG. 4 to FIG. 6 and FIG. 11 and FIG. 12. For details, refer to the related content of S+ and S- in FIG. 7. Details are not described again.

In an embodiment, the control guiding circuit further includes an auxiliary power circuit, the liquid cooling device further includes an auxiliary power plug, and the vehicle socket further includes an auxiliary power socket. The auxiliary power circuit includes a first auxiliary power circuit located in the liquid cooling device and a second auxiliary power circuit located in the electric vehicle. One end of the first auxiliary power circuit is connected to the controller of the liquid cooling device, and the other end of the first auxiliary power circuit is connected to the auxiliary power plug. One end of the second auxiliary power circuit is connected to the controller of the electric vehicle, and the other end of the second auxiliary power circuit is connected to the auxiliary power socket.

For the auxiliary power socket and the auxiliary power plug in this embodiment of this application, refer to the design in FIG. 7. Details are not described again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle-mounted charging connection apparatus, wherein the vehicle-mounted charging connection apparatus is used in an electric vehicle, the vehicle-mounted charging connection apparatus comprises a first vehicle socket and a liquid cooling connection confirm circuit, the first vehicle socket comprises a liquid cooling socket and a liquid cooling connection confirm socket, and the first vehicle socket is configured to connect to a liquid cooling connector of a liquid cooling device;
one end of the liquid cooling socket is configured to connect to a liquid cooling plug of the liquid cooling connector, and the other end of the liquid cooling socket is connected to a thermal management system of the power battery through a liquid cooling pipeline; and the liquid cooling socket is configured to receive a coolant output by the liquid cooling plug, or the liquid cooling socket is configured to output a coolant to the liquid cooling plug;
one end of the liquid cooling connection confirm socket is configured to connect to a liquid cooling connection confirm plug of the liquid cooling connector, and the other end of the liquid cooling connection confirm socket is connected to the liquid cooling connection confirm circuit; and
the vehicle-mounted charging connection apparatus is configured to:
determine a status of connection between the liquid cooling socket and the liquid cooling plug by using the liquid cooling connection confirm circuit; and
in response to the liquid cooling socket being successfully connected to the liquid cooling plug, send, to the liquid cooling device, a packet indicating that the liquid cooling socket is successfully connected to the liquid cooling plug.

2. The vehicle-mounted charging connection apparatus according to claim 1, wherein when the liquid cooling socket is connected to the liquid cooling plug, the liquid cooling connection confirm circuit connected to the liquid cooling connection confirm socket and a liquid cooling connection confirm circuit connected to the liquid cooling connection confirm plug form a current loop, and the vehicle-mounted charging connection apparatus is configured to detect a voltage at a detection point in the current loop to determine the status of connection between the liquid cooling socket and the liquid cooling plug; and
in response to the voltage at the detection point in the liquid cooling connection confirm circuit reaching a vehicle-end preset value, the vehicle-mounted charging connection apparatus is configured to determine that the liquid cooling socket is successfully connected to the liquid cooling plug.

3. The vehicle-mounted charging connection apparatus according to claim 1 or 2, wherein the vehicle socket further comprises a ground socket; one end of the ground socket is configured to connect to a ground plug of the liquid cooling connector, and the other end of the ground socket is connected to a vehicle body ground platform; the liquid cooling connection confirm plug comprises a first liquid cooling connection confirm plug and a second liquid cooling connection confirm plug, the liquid cooling connection confirm circuit comprises a conducting wire, and the first liquid cooling connection confirm plug is connected to the second liquid cooling connection confirm plug through the conducting wire; and the liquid cooling connection confirm socket comprises a first liquid cooling connection confirm socket and a second liquid cooling connection confirm socket, and the liquid cooling connection confirm circuit comprises a first resistor unit; and
the first liquid cooling connection confirm socket is connected to a voltage source through the first resistor unit, and the second liquid cooling connection confirm circuit is connected to the vehicle body ground platform.

4. The vehicle-mounted charging connection apparatus according to claim 3, wherein
in response to a voltage at a detection point between the first resistor unit and the first liquid cooling connection confirm socket reaching the vehicle-end preset value, the vehicle-mounted charging connection apparatus is configured to determine that the liquid cooling socket is successfully connected to the liquid cooling plug.

5. The vehicle-mounted charging connection apparatus according to claim 1 or 2, wherein the vehicle socket further comprises a ground socket; one end of the ground socket is configured to connect to a ground plug of the liquid cooling connector, and the other end of the ground socket is connected to a vehicle body ground platform; and the liquid cooling connection confirm plug comprises a first liquid cooling connection confirm plug and a second liquid cooling connection confirm plug, the liquid cooling connection confirm circuit comprises a conducting wire, and the first liquid cooling connection confirm plug is connected to the second liquid cooling connection confirm plug through the conducting wire;
the liquid cooling connection confirm socket comprises a first liquid cooling connection confirm socket and a second liquid cooling connection confirm socket, and the liquid cooling connection confirm circuit comprises a second resistor unit; and
the first liquid cooling connection confirm socket is connected to a voltage source, and the second liquid cooling connection confirm socket is connected to the vehicle body ground platform through the second resistor unit.

6. The vehicle-mounted charging connection apparatus according to claim 5, wherein
in response to a voltage at a detection point between the second resistor unit and the second liquid cooling connection confirm socket reaching the vehicle-end preset value, the vehicle-mounted charging connection apparatus is configured to determine that the liquid cooling socket is successfully connected to the liquid cooling plug.

7. The vehicle-mounted charging connection apparatus according to any one of claims 3 to 6, wherein the electric vehicle comprises a traction apparatus, and the traction apparatus is configured to draw the liquid cooling connector to move, so that the first vehicle socket is fully connected to the liquid cooling connector; and
the liquid cooling connection confirm socket further comprises a third liquid cooling connection confirm socket, a distance between the second liquid cooling connection confirm socket and the plug/unplug end is equal to a distance between the third liquid cooling connection confirm socket and the plug/unplug end, a distance between a liquid inlet/outlet of the liquid cooling socket and the plug/unplug end is less than the distance between the third liquid cooling connection confirm socket and the plug/unplug end, and the distance between the liquid inlet/outlet of the liquid cooling socket and the plug/unplug end is greater than or equal to a distance between the first liquid cooling connection confirm socket and the plug/unplug end.

8. The vehicle-mounted charging connection apparatus according to any one of claims 1 to 7, wherein the vehicle-mounted charging connection apparatus further comprises a wireless communication module; and
the vehicle-mounted charging connection apparatus is configured to send the packet to the charging pile by using the wireless communication module.

9. The vehicle-mounted charging connection apparatus according to any one of claims 1 to 8, wherein the vehicle-mounted charging connection apparatus further comprises a charging connection confirm circuit and a second vehicle socket, and the second vehicle socket comprises a direct current socket and a charging connection confirm socket; and one end of the direct current socket is configured to connect to a direct current plug of a charging connector, and the other end of the direct current socket is connected to the power battery;
one end of the charging connection confirm socket is configured to connect to a connection confirm plug of the charging connector, and the other end of the charging connection confirm socket is connected to the charging connection confirm circuit; and
the vehicle-mounted charging connection apparatus is configured to determine a status of connection between the direct current socket and the direct current plug by using the charging connection confirm circuit.

10. The vehicle-mounted charging connection apparatus according to claim 9, wherein the second vehicle socket further comprises an auxiliary power socket; and one end of the auxiliary power socket is configured to connect to an auxiliary power plug of the charging connector, and the other end of the auxiliary power socket is configured to receive a direct current; and
the second vehicle socket further comprises a second communication socket; and one end of the second communication socket is configured to connect to a communication plug of the charging connector, and the other end of the second communication socket is connected to the controller.

11. The vehicle-mounted charging connection apparatus according to claim 9 or 10, wherein the vehicle-mounted charging connection apparatus is configured to:
when the liquid cooling socket is successfully connected to the liquid cooling plug and the direct current socket is successfully connected to the direct current plug, send, to the charging pile, a packet that is used to request the charging pile to output a first charging power; or
when the direct current socket is successfully connected to the direct current plug, send, to the charging pile, a packet that is used to request the charging pile to output a second charging power, wherein the second charging power is less than the first charging power.

12. An electric vehicle, wherein the electric vehicle comprises the vehicle-mounted charging connection apparatus according to any one of claims 1 to 11, a power battery, and a thermal management system, and the thermal management system is configured to dissipate heat for the power battery.

13. A liquid cooling device, wherein the liquid cooling device comprises a liquid cooling connector plug, a liquid cooling connection confirm circuit, and a liquid cooling system, and the liquid cooling connector plug comprises a liquid cooling plug and a liquid cooling connection confirm plug; and one end of the liquid cooling plug is configured to connect to a liquid cooling socket of an electric vehicle, and the other end of the liquid cooling plug is connected to the liquid cooling system through a pipeline;
one end of the liquid cooling connection confirm plug is configured to connect to a liquid cooling connection confirm socket of the electric vehicle, and the other end of the liquid cooling connection confirm plug is connected to the liquid cooling connection confirm circuit;
the liquid cooling device is configured to receive a packet that indicates that the liquid cooling socket is successfully connected to the liquid cooling plug and that is sent by the electric vehicle; and
in response to the liquid cooling socket being successfully connected to the liquid cooling plug, the liquid cooling system is configured to output a coolant to the electric vehicle by using the liquid cooling plug.

14. The liquid cooling device according to claim 13, wherein when the liquid cooling plug is connected to the liquid cooling socket, the liquid cooling connection confirm circuit connected to the liquid cooling connection confirm plug and a liquid cooling connection confirm circuit connected to the liquid cooling connection confirm socket form a current loop, so that the electric vehicle determines a status of connection between the liquid cooling plug and the liquid cooling socket by detecting a voltage at a detection point in the liquid cooling connection confirm loop.

15. The liquid cooling device according to claim 13 or 14, wherein the liquid cooling connection confirm plug comprises a first liquid cooling connection confirm plug and a second liquid cooling connection confirm plug, the liquid cooling socket comprises a first liquid cooling connection confirm socket and a second liquid cooling connection confirm socket, the first liquid cooling connection confirm socket is connected to a voltage source, and the second liquid cooling connection confirm socket is connected to a vehicle body ground platform through a resistor, so that the electric vehicle determines the status of connection between the liquid cooling socket and the liquid cooling plug by detecting a voltage at a detection point between the resistor and the second liquid cooling connection confirm socket; or the first liquid cooling connection confirm socket is connected to a voltage source through a resistor, and the second liquid cooling connection confirm socket is connected to the vehicle body ground platform, so that the electric vehicle determines the status of connection between the liquid cooling socket and the liquid cooling plug by detecting a voltage at a detection point between the resistor and the first liquid cooling connection confirm socket; and
the liquid cooling connection confirm circuit comprises a conducting wire, and the first liquid cooling connection confirm plug is connected to the second liquid cooling connection confirm plug through the conducting wire.

16. The liquid cooling device according to claim 15, wherein the liquid cooling connection confirm plug further comprises a third liquid cooling connection confirm plug, a distance between the second liquid cooling connection confirm plug and the plug/unplug end is equal to a distance between the third liquid cooling connection confirm plug and the plug/unplug end, a distance between a liquid inlet/outlet of the liquid cooling plug and the plug/unplug end is less than a distance between the third liquid cooling connection confirm plug and the plug/unplug end, and the distance between the liquid inlet/outlet of the liquid cooling plug and the plug/unplug end is greater than or equal to a distance between the first liquid cooling connection confirm plug and the plug/unplug end.

17. The liquid cooling device according to any one of claims 13 to 16, wherein the liquid cooling device further comprises a wireless communication module; and
the liquid cooling device is configured to receive and send packets by using the wireless communication module.

18. A charging pile, wherein the charging pile comprises the liquid cooling device according to any one of claims 13 to 17, a power module, and a charging connector, the charging connector is connected to the power module, and the charging connector is configured to charge an electric vehicle.
